# EUROPEAN PATENT APPLICATION

(11) **EP 3 506 181 A1**
(43) Date of publication of application: **03.07.2019**
(21) Application number: 16915494.5
(22) Date of filing: 09.09.2016
(51) Int. Cl.: G06Q 10/10, H04M 1/247

(54) **INFORMATION REMINDING METHOD AND MOBILE DEVICE**

(71) Applicant: Huawei Technologies Co., Ltd., Longgang District Shenzhen, Guangdong 518129 (CN)
(72) Inventor: WANG, Yahui, Shenzhen Guangdong 518129 (CN)
(74) Representative: Gill Jennings & Every LLP
(86) International application number: PCT/CN2016/098579
(87) International publication number: WO 2018/045560

(57) **Abstract**

This specification provides an information reminder method and a mobile device. The method includes: detecting a to-do list stored on the mobile device, where the to-do list includes at least one piece of content; determining at least one application corresponding to the to-do list; detecting an operation performed on any one of the at least one application; and responding to the operation to display notification information that includes the at least one piece of content in the to-do list. According to the method in the embodiments, even if the to-do list does not have a reminder time and does not include a specific reminder location, a user can be notified by using an application that can execute the to-do list, so that when the user enters an operation to the application, the application can automatically remind the user of the to-do list corresponding to the application. In this way, efficiency of the user in executing the to-do list is improved, and omission of the to-do list is effectively prevented.

## Description

### TECHNICAL FIELD

The present invention relates to the field of communications technologies, and in particular, to an information reminder method and a mobile device.

### BACKGROUND

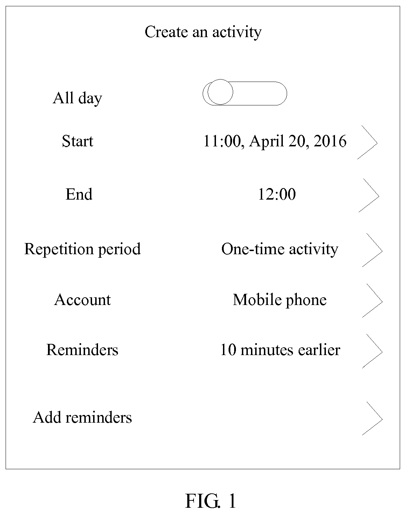

An existing mobile device can implement a reminder function. A user may record, on an application such as a calendar installed on a mobile device, a to-do list of which the user needs to be reminded. As shown in FIG. 1, when the user is reminded of the to-do list by using the calendar, the user may record, on the calendar, the to-do list of which the user needs to be reminded and a reminder time. The reminder time may include a start time, an end time, a repetition period, and the like of the to-do list of which the user needs to be reminded. The mobile device may remind the user of the to-do list at the reminder time recorded on the calendar. Referring to FIG. 1, a to-do list that is entered by the user and of which the user needs to be reminded is taking a plane, a start time is set to 11:00 on April 20, 2016, and an end time is set to 12:00. In this case, the user may receive a reminder from the mobile device within a time period from 11:00 to 12:00 on April 20, 2016. A reminder manner may be lighting a screen of the mobile device to display the recorded to-do list that the user needs to take a plane, or reminding the user through vibration. When the user wakes up the mobile device based on the vibration, the mobile device may automatically display the to-do list of taking a plane, and the user will not forget the to-do list of taking a plane based on the reminder from the mobile device.

The calendar installed on the existing mobile device may also receive a location-based to-do list entered by the user. When the mobile device detects arrival of the user at a recorded location, the mobile device may remind the user of the to-do list corresponding to the arrival of the user.

In addition, the mobile device may remind the user based on a reminder time of a to-do list entered by the user. However, a reminder time does not need to be recorded in a large quantity of to-do lists that are recorded by the user and of which the user needs to be reminded. For example, if a to-do list that is recorded by the user and of which the user needs to be reminded is buying the book The Storied Life of A.J. Fikry, no time point at which the to-do list needs to be completed is required in the to-do list of buying the book. Consequently, the existing mobile device cannot remind the user of a reminder item that does not have a reminder time.

### SUMMARY

This specification provides a non-time-based and non-location-based information reminder method and a mobile device.

A first aspect provides a method, where the method is used on a mobile device and includes the following steps.

Step A. The mobile device detects a to-do list stored on the mobile device.

The mobile device stores the to-do list by using a system application of the mobile device or a third-party application that is downloaded based on a user operation.

The to-do list includes at least one piece of content, and the at least one piece of content does not include a reminder time and a reminder location.

Optionally, the to-do list is stored in a form of text, and/or a picture, and/or a voice.

Step B. The mobile device determines at least one application corresponding to the to-do list.

The mobile device analyzes the stored to-do list to obtain the at least one piece of content included in the to-do list, so that the mobile device can determine, based on the at least one piece of content included in the to-do list, the at least one application corresponding to the to-do list.

Specifically, the system application of the mobile device may analyze the to-do list to obtain the at least one piece of content included in the to-do list, or an application that has been installed on the mobile device may analyze the to-do list to obtain the at least one piece of content included in the to-do list.

The mobile device can analyze, based on a Natural Language Processing (English full name: Natural Language Processing, NLP for short) technology in artificial intelligence, the to-do list stored on the mobile device, to obtain the at least one piece of content.

The mobile device can automatically perform, by using the NLP technology, an operation such as extraction, filtering, retrieval, and analysis on a keyword in a natural language of the to-do list, so that the at least one piece of content included in the to-do list can be determined.

An association relationship between the to-do list and an application can be established by using the at least one piece of content included in the to-do list.

Specifically, the at least one application is an application that has been installed on the mobile device, and any one of the at least one application is an application required to complete the to-do list. It should be understood that any one of the at least one application may be used to complete some or all items in the to-do list. For example, a first to-do list is traveling to Sanya. The first to-do list is corresponding to three applications: a ticket buying application, a hotel booking application, and a Qunar application. The ticket buying application can be used only for buying a ticket, the hotel booking application can be used only for booking a hotel, and the Qunar application can be used for buying a ticket and booking a hotel.

Step C. The mobile device detects an operation performed on any one of the at least one application. The at least one application is corresponding to the to-do list.

Specifically, in this embodiment, if the mobile device determines that an application that currently receives an operation entered by a user is corresponding to the to-do list installed on the mobile device, the mobile device continues to perform step D.

Step D. The mobile device responds to the operation.

In a manner of responding to the operation, the mobile device displays notification information that includes the at least one piece of content in the to-do list.

Specifically, the mobile device may display all content of a to-do list corresponding to the operation or partial content of the to-do list corresponding to the operation.

According to the foregoing technical solution, for a to-do list that does not have a reminder time and a reminder location, the user can be notified by using an application that can execute the to-do list, so that when the user enters an operation to the application, the application can automatically remind the user of the to-do list corresponding to the application.

With reference to the first aspect, in a first implementation of the first aspect,
in step C, the operation includes any one of the following operations:
In a manner, the operation is touching an icon of the application corresponding to the to-do list for a time not less than a preset time threshold.

Alternatively, in another manner, the operation is touching an icon of the application corresponding to the to-do list by using a force not less than a preset force threshold.

A pressure sensor is built in the mobile device. The pressure sensor can obtain the force of touching, by the user, the icon of the application corresponding to the to-do list. If the mobile device determines, by using data reported by the pressure sensor, that the force of touching, by the user, the icon of the application corresponding to the to-do list is not less than the preset force threshold, the mobile device determines the operation performed by the user on the icon of the application corresponding to the to-do list.

In another manner, the operation is touching an icon of the application corresponding to the to-do list, where a distance between the icon and a touch entity is not greater than a preset distance threshold.

A distance sensor is built in the mobile device. The distance sensor can obtain the distance between the touch entity and the icon of the application corresponding to the to-do list. If the mobile device determines, by using data reported by the distance sensor, that the distance between the touch entity and the icon of the application corresponding to the to-do list is not greater than the preset distance threshold, the mobile device determines the operation performed on the icon of the application corresponding to the to-do list.

The touch entity related to this specification may be a finger of the user, a capacitive stylus, or the like.

Based on any one of the foregoing operations, step D in this embodiment specifically includes:

The mobile device receives a menu displayed on the application on which the user performs the operation.

The menu includes the notification information that includes the at least one piece of content in the to-do list.

According to the method, the mobile device can determine, based on the operation entered by the user to the application, the to-do list corresponding to the application, and then display, by popping up the menu corresponding to the application, the notification information that includes the at least one piece of content in the to-do list, so that the user can obtain the entered to-do list by using the menu popped up by the application, and the user can be effectively prevented from omitting the to-do list.

With reference to the first aspect, in a second implementation of the first aspect,
in step C, the operation includes any one of the following operations:
In a manner, the operation is performing tapping.

Optionally, the tapping may be understood as follows: The mobile device detects that a tapping operation entered by the user is performed on an icon of the application corresponding to the to-do list.

Optionally, the tapping may be understood as follows: The mobile device detects that a tapping operation entered by the user is performed on a running interface of an application running in a background of the mobile device.

In another manner, the operation is touching an icon of the application corresponding to the to-do list, where a distance between the icon and a touch entity is not greater than a preset distance threshold.

In a possible implementation, a distance sensor is built in the mobile device. The distance sensor can obtain the distance between the touch entity and the icon of the application corresponding to the to-do list. If the mobile device determines, by using data reported by the distance sensor, that the distance between the touch entity and the icon of the application corresponding to the to-do list is not greater than the preset distance threshold, the mobile device determines the operation performed on the icon of the application corresponding to the to-do list.

The touch entity related to this specification may be a finger of the user, a capacitive stylus, or the like.

In another manner, the operation is entering a target voice by the user.

The target voice is used to enable a voice of the application corresponding to the to-do list.

Based on any one of the foregoing operations, step D in this embodiment specifically includes:
The mobile device displays a home page of the application on which the operation is performed.

The home page includes the notification information that includes the at least one piece of content in the to-do list.

Optionally, the home page may further include an operation interface, the operation interface displays the to-do list corresponding to the application, and the operation interface can complete the corresponding to-do list based on a touch event entered by the user.

According to the method, the mobile device can determine, based on the operation entered by the user to the application, the to-do list corresponding to the application, and then display, by using the home page of the application, the notification information that includes the at least one piece of content in the to-do list, so that the user obtains the entered to-do list by using the home page displayed on the application, and the user can be effectively prevented from omitting the to-do list.

Because the home page displays the operation interface, not only the user can be reminded of the to-do list, but also the operation interface including the to-do list can be generated. In addition, the corresponding to-do list is directly implemented when the operation interface receives the touch event entered by the user. In this way, an operation step required by the user to implement the to-do list is further reduced, and efficiency of the user in completing the to-do list is improved.

With reference to any one of the first aspect to the second implementation of the first aspect, in a third implementation of the first aspect,
the method further includes step E.

Step E in this embodiment and step B, step C, and step D provided in the first aspect of this embodiment are not performed in a particular time sequence, provided that step E in this embodiment is performed after step A.

Step E. When detecting completion of the to-do list, the mobile device deletes the to-do list stored on the mobile device.

A manner of determining completion of the to-do list is not limited. For example, if the to-do list is completed, the user may enter a deletion instruction to the mobile device, so that an application storing the to-do list deletes the corresponding to-do list based on the deletion instruction. For another example, a system of the mobile device can detect whether the to-do list is completed, and automatically delete the completed to-do list if completion of the to-do list is detected.

When it is determined that the to-do list is completed, the completed to-do list is deleted in a timely manner, to effectively prevent a possibility that an application of the mobile device reminds the user of the completed to-do list, and prevent the user from performing a misoperation on the to-do list. In addition, the completed to-do list can be deleted in a timely manner, so that a waste of storage space of the mobile device is prevented, and utilization efficiency of the storage space of the mobile device is improved.

With reference to any one of the first aspect to the third implementation of the first aspect, in a fourth implementation of the first aspect,
the method further includes step F.

Step F in this embodiment and step B, step C, and step D provided in the first aspect of this embodiment are not performed in a particular time sequence, provided that step F in this embodiment is performed after step A.

Step F. If the mobile device detects an operation of viewing the to-do list, the mobile device displays the to-do list and the at least one application corresponding to the to-do list.

If the user needs to view the to-do list, the user may enter an operation of viewing the to-do list.

After the mobile device receives the operation, entered by the user, of viewing the to-do list, an application interface of the application storing the to-do list is displayed on a screen of the mobile device. The application interface displays all to-do lists stored in the mobile device and applications corresponding to all the to-do lists.

In this way, the user can view, at any time, the to-do list stored on the mobile device and the application corresponding to the to-do list. This helps the user obtain the to-do list stored on the mobile device and obtain the application that can complete the to-do list.

With reference to any one of the first aspect to the fourth implementation of the first aspect, in a fifth implementation of the first aspect,
step B in this embodiment specifically includes:
Step B11. The mobile device creates at least one to-do list category set.

The to-do list category set includes at least one to-do list.

The mobile device analyzes to-do lists stored in the mobile device, determines requirements of the to-do lists based on at least one piece of content included in the to-do lists, and creates the to-do list category set based on the requirements of the to-do lists, so that all the to-do lists in the same to-do list category set have a same requirement.

Step B12. The mobile device determines at least one target application corresponding to a target to-do list category set.

The target to-do list category set is any one of the at least one created to-do list category set, and the target application is an application required to complete at least one to-do list in the target to-do list category set.

To determine the application corresponding to the to-do list, the mobile device may first determine a target to-do list category set in which the to-do list is located, and the application corresponding to the to-do list is a target application corresponding to the target to-do list category set.

The mobile device can analyze all the to-do lists stored in the mobile device, to establish the target to-do list category set. In this way, when determining the target application corresponding to the to-do list, the mobile device only needs to determine the application corresponding to the target to-do list category set to which the to-do list belongs. Therefore, efficiency in determining the application corresponding to the to-do list is improved, power consumption for determining the application corresponding to the to-do list is reduced, electricity consumption of the mobile device is lowered, and standby duration of the mobile device is extended.

With reference to any one of the first aspect to the fifth implementation of the first aspect, in a sixth implementation of the first aspect,
step B in this embodiment specifically includes:
Step B21. The mobile device creates at least one application category set.

The application category set includes at least one application that has been installed on the mobile device, and applications in the same application category set are used to implement a same function.

Step B22. The mobile device determines a target application category set that matches the at least one piece of content included in the to-do list.

Any one of at least one application included in the target application category set is corresponding to the to-do list.

The mobile device may match, with a requirement of the to-do list stored on the mobile device, a function that can be implemented by each application category set, to establish a correspondence between the to-do list and the application category set.

A process in which the mobile device determines a correspondence between the to-do list and the at least one application may be based on the fifth implementation of the first aspect, or may be based on the sixth implementation of the first aspect, or may be based on a combination of the fifth implementation of the first aspect and the sixth implementation of the first aspect. No limitation is imposed thereto.

According to the method, the mobile device can classify applications installed on the mobile device, and then can determine a function that can be implemented by a created application category list set, so that the mobile device can establish a correspondence between the application category list set and the to-do list based on the requirement of the stored to-do list. In this way, when determining the target application corresponding to the to-do list, the mobile device only needs to determine a target application category list set to which the application belongs, and then determines a to-do list corresponding to the target application category list set. Therefore, efficiency in determining the application corresponding to the to-do list is improved, power consumption for determining the application corresponding to the to-do list is reduced, electricity consumption of the mobile device is lowered, and standby duration of the mobile device is extended.

With reference to the sixth implementation of the first aspect, in a seventh implementation of the first aspect,
after step B21, the method further includes:
Step B211. If the mobile device detects installation of a first application on the mobile device, the mobile device determines an application category set to which the first application belongs.

The application category set to which the first application belongs is any one of the at least one created application category set, and a function that can be implemented by the first application is the same as a function that can be implemented by any application in the application category set to which the first application belongs.

Specifically, when detecting current installation of the first application, the mobile device triggers execution of step B211, so that the mobile device can determine the function that can be implemented by the first application.

Step B212. The mobile device adds the first application to the application category set to which the first application belongs.

The mobile device can determine, based on the function that can be implemented by the first application, the application category set to which the first application belongs.

According to the method, an application that has been installed on the mobile device can be detected in a timely manner, so as to add the installed application to the application category set in a timely manner based on a function that can be implemented by the installed application, so that the correspondence that is between the to-do list and the at least one application and that is determined by the mobile device can be updated in a timely manner, to prevent a case in which the user cannot be reminded of the to-do list in a timely manner because the application is not updated in a timely manner.

With reference to the sixth implementation of the first aspect, in an eighth implementation of the first aspect,
after step B21, the method further includes:
Step B213. If the mobile device detects uninstallation of a second application from the mobile device, the mobile device determines an application category set to which the second application belongs.

When detecting current uninstallation of the second application, the mobile device triggers execution of step B213, so that the mobile device determines the application category set to which the second application belongs.

Step B214. The mobile device deletes the second application from the application category set to which the second application belongs.

It should be noted that step B213 to step B214 and step B211 to step B212 in this embodiment are not performed in a particular time sequence.

According to the method, an application that has been installed on the mobile device can be detected in a timely manner, so as to delete the uninstalled application from the corresponding application category set in a timely manner based on a function that can be implemented by the uninstalled application, so that the correspondence that is between the to-do list and the at least one application and that is determined by the mobile device can be updated in a timely manner, to prevent a case in which the user cannot be reminded of the to-do list in a timely manner because the application is not updated in a timely manner.

With reference to the method according to any one of the sixth implementation of the first aspect to the eighth implementation of the first aspect, in a ninth implementation of the first aspect,
after step D, the following step is further included:
Step D11. If the mobile device detects a touch event performed on the notification information, the mobile device triggers the third application to display a corresponding interface, where the corresponding interface is an interface in which the to-do list can be implemented.

The third application is the at least one application corresponding to the to-do list, an operation performed on the third application is detected, and the corresponding interface displayed by the third application is an application interface in which the to-do list can be implemented.

According to the method, if the notification information displayed on the application receives the touch event entered by the user, the application can directly display the corresponding interface, and the user can directly execute the to-do list by using the running interface. It can be learned that, the user can quickly execute the corresponding to-do list by using the running interface provided by the application. In this way, a procedure and duration that are required by the user to execute the to-do list are reduced, and efficiency of the user in performing an operation on the to-do list is improved.

With reference to the ninth implementation of the first aspect, in a tenth implementation of the first aspect,
step D11 specifically includes:
Step Dill. If the mobile device detects the touch event performed on the notification information, the mobile device determines whether notification information sent by a fourth application is received.

The notification information is used to indicate that the fourth application cannot implement the to-do list.

The fourth application is in the target application category set.

Step D112. If the mobile device determines that the notification information sent by the fourth application is received, the mobile device controls the third application to display the corresponding interface.

The third application is in the target application category set, and the third application and the fourth application are different applications.

According to the method, if the notification information displayed on the application receives the touch event entered by the user, and the fourth application corresponding to the to-do list cannot successfully execute the to-do list, the mobile device can enable the third application, so that the third application completes the to-do list, and the user can directly execute the to-do list by using a running interface of the third application. It can be learned that, the user can quickly execute the corresponding to-do list by using the running interface provided by the application. In this way, a procedure and duration that are required by the user to execute the to-do list are reduced, and efficiency of the user in performing an operation on the to-do list is improved.

A second aspect provides an information reminder method, where the method is used on a mobile device and includes the following steps.

Step G. If the mobile device detects an operation performed on an application, the mobile device determines a to-do list corresponding to the application.

The to-do list includes at least one piece of content, and the application is an application required to complete the to-do list.

Optionally, the application is an application that has been installed on the mobile device.

Optionally, the application may be a web application, and the web application is an application implemented by using a web page technology. In a word, the web application is an application that runs on a network and a standard browser and that is developed based on the web page technology to implement a specific function.

Step H. The mobile device displays notification information that includes at least one piece of content included in the to-do list.

Specifically, the mobile device may display all content of a to-do list corresponding to the operation or partial content of the to-do list corresponding to the operation.

According to the foregoing technical solution, for a to-do list that does not have a reminder time and a reminder location, the mobile device can notify a user by using an application that can execute the to-do list, so that when the user enters an operation to the application, the application can automatically remind the user of the to-do list corresponding to the application.

With reference to the second aspect, in a first implementation of the second aspect,
in step G, the operation includes any one of the following operations:
In a manner, the operation is touching a shortcut icon of the application corresponding to the to-do list for a time not less than a preset time threshold.

Alternatively, in another manner, the operation is touching an icon of the application corresponding to the to-do list by using a force not less than a preset force threshold.

Optionally, a pressure sensor is built in the mobile device. The pressure sensor can obtain the force of touching, by the user, the icon of the application corresponding to the to-do list. If the mobile device determines, by using data reported by the pressure sensor, that the force of touching, by the user, the icon of the application corresponding to the to-do list is not less than the preset force threshold, the mobile device determines the operation performed by the user on the icon of the application corresponding to the to-do list.

In another manner, the operation is touching an icon of the application corresponding to the to-do list, where a distance between the icon and a touch entity is not greater than a preset distance threshold.

Optionally, a distance sensor is built in the mobile device. The distance sensor can obtain the distance between the touch entity and the icon of the application corresponding to the to-do list. If the mobile device determines, by using data reported by the distance sensor, that the distance between the touch entity and the icon of the application corresponding to the to-do list is not greater than the preset distance threshold, the mobile device determines the operation performed on the icon of the application corresponding to the to-do list.

The icon related to this specification may be an icon of an application that has been installed on the mobile device, or the icon is a shortcut icon of the web application.

Based on any one of the foregoing operations, step H in this embodiment specifically includes:
The mobile device receives a menu displayed on the application on which the user performs the operation.

The menu includes the notification information that includes the at least one piece of content in the to-do list.

According to the method, the mobile device can determine, based on the operation entered by the user to the application, the to-do list corresponding to the application, and then display, by popping up the menu corresponding to the application, the notification information that includes the at least one piece of content in the to-do list, so that the user can obtain the entered to-do list by using the menu popped up by the application, and the user can be effectively prevented from omitting the to-do list.

With reference to the second aspect, in a second implementation of the second aspect,
in step G, the operation includes any one of the following operations:
In a manner, the operation is performing tapping.

Optionally, the tapping may be understood as follows: The mobile device detects that a tapping operation entered by the user is performed on an icon of the application corresponding to the to-do list.

Optionally, the tapping may be understood as follows: The mobile device detects that a tapping operation entered by the user is performed on a running interface of an application running in a background of the mobile device. In another manner, the operation is touching an icon of the application corresponding to the to-do list, where a distance between the icon and a touch entity is not greater than a preset distance threshold.

The icon is an icon of an application that has been installed on the mobile device, or the icon is a shortcut icon of the web application.

In another manner, the user enters, on a browser, a keyword for searching for the web application, so that a running interface of the browser can redirect to a running interface in which the web application can be run, and accordingly a running interface currently displayed on the browser can implement a function of the web application.

Based on any one of the foregoing operations, step H in this embodiment includes:
The mobile device displays a home page of the application on which the operation is performed.

The home page includes the notification information that includes the at least one piece of content in the to-do list.

Optionally, the home page may further include an operation interface, the operation interface displays the to-do list corresponding to the application, and the operation interface can complete the corresponding to-do list based on a touch event entered by the user.

According to the method, the mobile device can determine, based on the operation entered by the user to the application, the to-do list corresponding to the application, and then display, by using the home page of the application, the notification information that includes the at least one piece of content in the to-do list, so that the user obtains the entered to-do list by using the home page displayed on the application, and the user can be effectively prevented from omitting the to-do list.

Because the home page displays the operation interface, not only the user can be reminded of the to-do list, but also the operation interface including the to-do list can be generated. In addition, the corresponding to-do list is directly implemented when the operation interface receives the touch event entered by the user. In this way, an operation step required by the user to implement the to-do list is further reduced, and efficiency of the user in completing the to-do list is improved.

With reference to any one of the second aspect to the second implementation of the second aspect, in a third implementation of the second aspect,
the method further includes step M.

Step M in this embodiment and step G and step H provided in the second aspect of this embodiment are not performed in a particular time sequence.

Step M. When detecting completion of the to-do list, the mobile device deletes the to-do list stored on the mobile device.

A manner of determining completion of the to-do list is not limited in this specification. For example, if the to-do list is completed, the user may enter a deletion instruction to the mobile device, so that an application storing the to-do list deletes the corresponding to-do list based on the deletion instruction. For another example, a system of the mobile device can detect whether the to-do list is completed, and automatically delete the completed to-do list if completion of the to-do list is detected.

According to the method, when determining that the to-do list is completed, the mobile device can delete the completed to-do list in a timely manner, to effectively prevent a possibility that an application of the mobile device reminds the user of the completed to-do list, and prevent the user from performing a misoperation on the to-do list. In addition, according to the method in this embodiment, the completed to-do list can be deleted in a timely manner, so that a waste of storage space of the mobile device is prevented, and utilization efficiency of the storage space of the mobile device is improved.

With reference to any one of the second aspect to the third implementation of the second aspect, in a fourth implementation of the first aspect,
step G in this embodiment includes:
Step G11. The mobile device creates at least one to-do list category set.

The to-do list category set includes at least one to-do list.

Specifically, the mobile device analyzes to-do lists stored in the mobile device, determines requirements of the to-do lists based on at least one piece of content included in the to-do lists, and creates the to-do list category set based on the requirements of the to-do lists, so that all the to-do lists in the same to-do list category set have a same requirement.

Step G12. The mobile device determines at least one target application corresponding to a target to-do list category set.

The target to-do list category set is any one of the at least one created to-do list category set, and the target application is an application required to complete at least one to-do list in the target to-do list category set.

To determine the application corresponding to the to-do list, the mobile device may first determine a target to-do list category set in which the to-do list is located, and the application corresponding to the to-do list is a target application corresponding to the target to-do list category set.

According to the method, the mobile device can analyze all the to-do lists stored in the mobile device, to establish the target to-do list category set. In this way, when determining the target application corresponding to the to-do list, the mobile device only needs to determine the application corresponding to the target to-do list category set to which the to-do list belongs. Therefore, efficiency in determining the application corresponding to the to-do list is improved, power consumption for determining the application corresponding to the to-do list is reduced, electricity consumption of the mobile device is lowered, and standby duration of the mobile device is extended.

A third aspect provides a mobile device, including a first detection unit, a determining unit, a second detection unit, and a processing unit.

The first detection unit is configured to detect a to-do list stored on the mobile device, where the to-do list includes at least one piece of content, and the at least one piece of content does not include time information and location information.

The first detection unit is configured to perform step A shown in the first aspect. A specific execution process of step A is not described herein again.

The determining unit is configured to determine at least one application corresponding to the to-do list, where the at least one application is an application that has been installed on the mobile device, and any one of the at least one application is an application required to complete the to-do list.

The first determining unit is configured to perform step B shown in the first aspect. A specific execution process of step B is not described herein again.

The second detection unit is configured to detect an operation performed on any one of the at least one application.

The second detection unit is configured to perform step C shown in the first aspect. A specific execution process of step C is not described herein again.

The processing unit is configured to respond to the operation to display notification information that includes the at least one piece of content in the to-do list.

The processing unit is configured to perform step D shown in the first aspect. A specific execution process of step D is not described herein again.

According to the foregoing description, for a to-do list that does not have a reminder time and a reminder location, the mobile device can notify a user by using an application that can execute the to-do list, so that when the user enters an operation to the application, the application can automatically remind the user of the to-do list corresponding to the application.

With reference to the third aspect, in a first implementation of the third aspect,
the operation is touching an icon of any one of the at least one application corresponding to the to-do list for a time not less than a preset time threshold; or the operation is touching an icon of any one of the at least one application corresponding to the to-do list by using a force not less than a preset force threshold; or the operation is touching an icon of any one of the at least one application corresponding to the to-do list, where a distance between the icon and a touch entity is not greater than a preset distance threshold; or the operation is entering a target voice by the user, and the target voice is used to enable a voice of any one of the at least one application corresponding to the to-do list.

The processing unit is further configured to display a menu, where the menu includes the notification information that includes the at least one piece of content in the to-do list.

The processing unit is configured to perform step D shown in the first aspect. A specific execution process of step D is not described herein again.

With reference to the third aspect, in a second implementation of the third aspect,
the operation is performing tapping; or the operation is touching an icon of any one of the at least one application corresponding to the to-do list, where a distance between the icon and a touch entity is not greater than a preset distance threshold.

The processing unit is further configured to display a home page of the application on which the operation is performed, where the home page includes the notification information that includes the at least one piece of content in the to-do list.

The processing unit is configured to perform step D shown in the first aspect. A specific execution process of step D is not described herein again.

Optionally, the home page may further include an operation interface, the operation interface displays the to-do list corresponding to the application, and the operation interface can complete the corresponding to-do list based on a touch event entered by the user.

With reference to any one of the third aspect to the second implementation of the third aspect, in a third implementation of the third aspect,
the first detection unit is further configured to: when detecting completion of the to-do list, delete the to-do list stored on the mobile device.

The first detection unit is configured to perform step E shown in the first aspect. A specific execution process of step E is not described herein again.

With reference to any one of the third aspect to the third implementation of the third aspect, in a fourth implementation of the third aspect,
the mobile device further includes:
the second detection unit is further configured to: if an operation of viewing the to-do list is detected, display the to-do list and the at least one application corresponding to the to-do list.

The second detection unit is configured to perform step F shown in the first aspect. A specific execution process of step F is not described herein again.

In this way, the user can view, at any time, the to-do list stored on the mobile device and the application corresponding to the to-do list. This helps the user obtain the to-do list stored on the mobile device and obtain the application that can complete the to-do list.

With reference to any one of the third aspect to the fourth implementation of the third aspect, in a fifth implementation of the third aspect,
the determining unit includes a first determining unit and a second determining unit.

The first determining unit is configured to create at least one to-do list category set, where the to-do list category set includes at least one to-do list, and the at least one to-do list in the same to-do list category set has a same requirement.

The first determining unit is configured to perform step B11 shown in the first aspect. A specific execution process of step B11 is not described herein again.

The second determining unit is configured to determine at least one target application corresponding to a target to-do list category set, where the target to-do list category set is any one of the at least one created to-do list category set, and the target application is an application required to complete at least one to-do list in the target to-do list category set.

The second determining unit is configured to perform step B12 shown in the first aspect. A specific execution process of step B 12 is not described herein again.

With reference to any one of the third aspect to the fifth implementation of the third aspect, in a sixth implementation of the third aspect, the determining unit includes a third determining unit and a fourth determining unit.

The third determining unit is configured to create at least one application category set, where the application category set includes at least one application that has been installed on the mobile device, and applications in the same application category set are used to implement a same function.

The third determining unit is configured to perform step B21 shown in the first aspect. A specific execution process of step B21 is not described herein again.

The fourth determining unit is configured to determine a target application category set that matches the at least one piece of content included in the to-do list, where any one of at least one application included in the target application category set is corresponding to the to-do list.

The fourth determining unit is configured to perform step B22 shown in the first aspect. A specific execution process of step B22 is not described herein again.

With reference to the sixth implementation of the third aspect, in a seventh implementation of the third aspect,
the first detection unit is further configured to: if installation of a first application on the mobile device is detected, determine an application category set to which the first application belongs, where the application category set to which the first application belongs is any one of the at least one created application category set, and a function that can be implemented by the first application is the same as a function that can be implemented by any application in the application category set to which the first application belongs.

The first detection unit is configured to perform step B211 shown in the first aspect. A specific execution process of step B211 is not described herein again.

The processing unit is further configured to add the first application to the application category set to which the first application belongs.

The processing unit is configured to perform step B212 shown in the first aspect. A specific execution process of step B212 is not described herein again.

With reference to the sixth implementation of the third aspect, in an eighth implementation of the third aspect,
the first detection unit is further configured to: if uninstallation of a second application from the mobile device is detected, determine an application category set to which the second application belongs.

The first detection unit is configured to perform step B213 shown in the first aspect. A specific execution process of step B213 is not described herein again.

The processing unit is further configured to delete the second application from the application category set to which the second application belongs.

The processing unit is configured to perform step B214 shown in the first aspect. A specific execution process of step B214 is not described herein again.

With reference to the method according to any one of the sixth implementation of the third aspect to the eighth implementation of the third aspect, in a ninth implementation of the third aspect,
the second detection unit is further configured to: if a touch event performed on the notification information is detected, trigger the third application to display a corresponding interface; and
the processing unit is further configured to control the third application to display the corresponding interface, where the corresponding interface is an interface in which the to-do list can be implemented.

The second detection unit and the processing unit are configured to perform step D11 shown in the first aspect. A specific execution process of step D11 is not described herein again.

With reference to the ninth implementation of the third aspect, in a tenth implementation of the third aspect,
the second detection unit is further configured to: if the touch event performed on the notification information is detected, determine whether notification information sent by a fourth application is received, where the notification information is used to indicate that the fourth application cannot implement the to-do list, and the fourth application is in the target application category set; and the second detection unit is further configured to: if it is determined that the notification information sent by the fourth application is received, trigger the third application to display the corresponding interface.

The second detection unit is configured to perform step Dill shown in the first aspect. A specific execution process of step Dill is not described herein again.

The processing unit is further configured to control the third application to display the corresponding interface, where the third application is in the target application category set, and the third application and the fourth application are different applications.

The processing unit is configured to perform step D112 shown in the first aspect. A specific execution process of step D112 is not described herein again.

A fourth aspect provides a mobile device, including a processing unit and a display unit.

The processing unit is configured to: if an operation performed on an application is detected, determine a to-do list corresponding to the application, where the to-do list includes at least one piece of content, the at least one piece of content does not include time information and location information, and the application is an application required to complete the to-do list.

The processing unit is configured to perform step G shown in the second aspect. A specific execution process of step G is not described herein again.

The display unit is configured to display notification information that includes the at least one piece of content included in the to-do list.

The display unit is configured to perform step H shown in the second aspect. A specific execution process of step H is not described herein again.

For a to-do list that does not have a reminder time and does not include a specific reminder location, the mobile device can notify a user by using an application that can execute the to-do list, so that when the user enters an operation to the application, the application can automatically remind the user of the to-do list corresponding to the application.

A fifth aspect provides a mobile device, including:
one or more processors, a memory, a bus system, and one or more programs, where the processors are connected to the memory by using the bus system; and
the one or more programs are stored in the memory, the one or more programs include an instruction, and when being executed by the mobile device, the instruction enables the mobile device to perform the method according to any one of the first aspect to the tenth implementation of the first aspect.

A sixth aspect provides a mobile device, including:
one or more processors, a memory, a bus system, and one or more programs, where the processors are connected to the memory by using the bus system; and
the one or more programs are stored in the memory, the one or more programs include an instruction, and when being executed by the mobile device, the instruction enables the mobile device to perform the method according to any one of the second aspect to the fourth implementation of the first aspect.

A seventh aspect provides a computer readable storage medium that stores one or more programs, where the one or more programs include an instruction, and when being executed by a mobile device, the instruction enables the mobile device to perform the method according to any one of the first aspect to the tenth implementation of the first aspect.

An eighth aspect provides a computer readable storage medium that stores one or more programs, where the one or more programs include an instruction, and when being executed by a mobile device, the instruction enables the mobile device to perform the method according to any one of the second aspect to the fourth implementation of the first aspect.

According to the foregoing technical solutions, for the to-do list that does not have a reminder time and a reminder location, the mobile device can notify the user by using the application that can execute the to-do list, so that when the user enters an operation to the application, the application can automatically remind the user of the to-do list corresponding to the application. In this way, efficiency of the user in executing the to-do list is improved, and omission of the to-do list is effectively prevented.

### BRIEF DESCRIPTION OF DRAWINGS

FIG. 1 is a schematic diagram of an application interface of an application calendar used to remind a user of a to-do list according to the prior art;
FIG. 2 is a schematic structural diagram of a mobile device according to an embodiment of the present invention;
FIG. 3A and FIG. 3B are a flowchart of steps of an information reminder method according to an embodiment of the present invention;
FIG. 4 is a schematic diagram of an application interface of a memo used to store a to-do list according to an embodiment of the present invention;
FIG. 5 is a schematic diagram of an application interface of a memo used to store a to-do list according to another embodiment of the present invention;
FIG. 6 is a schematic diagram of an application scenario in which an information reminder method according to the present invention is applied;
FIG. 7 is a schematic diagram of another application scenario in which an information reminder method according to the present invention is applied;
FIG. 8 is a schematic diagram of another application scenario in which an information reminder method according to the present invention is applied;
FIG. 9 is a schematic diagram of another application scenario in which an information reminder method according to the present invention is applied;
FIG. 10 is a flowchart of steps of an information reminder method according to another embodiment of the present invention;
FIG. 11 is a schematic structural diagram of a mobile device according to an embodiment of the present invention;
FIG. 12 is a schematic structural diagram of a mobile device according to another embodiment of the present invention; and
FIG. 13 is a schematic diagram of another application scenario in which an information reminder method according to the present invention is applied.

### DESCRIPTION OF EMBODIMENTS

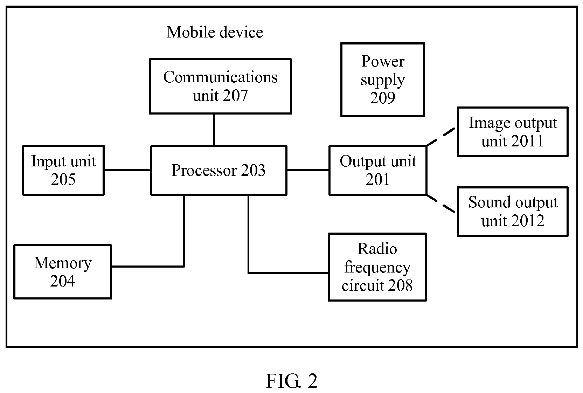

Embodiments of the present invention provide an information reminder method based on a mobile device. With reference to FIG. 2, the following describes a specific structure of a mobile device that can implement the information reminder method according to the embodiments of the present invention.

With reference to FIG. 2, the following describes a specific structure of a mobile device according to an embodiment. FIG. 2 is a schematic structural diagram of a mobile device according to an embodiment of the present invention.

The mobile device includes components such as an input unit 205, a processor 203, an output unit 201, a communications unit 207, a memory 204, and a radio frequency circuit 208.

These components communicate with each other by using one or more buses. Persons skilled in the art may understand that a structure of the mobile device shown in FIG. 2 does not constitute a limitation on the present invention. The structure may be a bus structure or may be a star structure. Components more or fewer than those shown in FIG. 2 may be included, some of the components may be combined, or the components may be arranged in different manners.

In an implementation of the present invention, the mobile device may be any mobile or portable electronic device, including but not limited to a smartphone, a mobile computer, a tablet computer, a personal digital assistant (Personal Digital Assistant, PDA), a media player, or the like.

The mobile device includes the output unit 201, the processor 203, the memory 204, the input unit 205, the communications unit 207, the radio frequency circuit 208, and a power supply 209.

The output unit 201 is configured to output a to-be-displayed image.

Specifically, the output unit 201 includes but is not limited to an image output unit 2011 and a sound output unit 2012.

The image output unit 2011 is configured to output text, a picture, and/or a video. The image output unit 2011 may include a display panel, for example, a display panel configured in a form of a liquid crystal display (English full name: Liquid Crystal Display, LCD for short), an organic light-emitting diode (English full name: Organic Light-Emitting Diode, OLED for short), a field emission display (English full name: field emission display, FED for short), or the like. Alternatively, the image output unit 2011 may include a reflective display, for example, an electrophoretic (electrophoretic) display, or a display using an interferometric modulation of light (English full name: Interferometric Modulation of Light) technology.

The image output unit 2011 may include a single display or a plurality of displays of different sizes. In a specific implementation of the present invention, a touchscreen may also be used as the display panel of the output unit 201.

For example, when the touchscreen detects a gesture operation of touching or approaching the touchscreen, the touchscreen transmits the gesture operation to the processor 203 to determine a touch event type, and then the processor 203 provides corresponding visual output on the display panel based on the touch event type. Although the input unit 205 and the output unit 201 in FIG. 2 serve as two independent components to implement input and output functions of the mobile device, in some embodiments, the touchscreen and the display panel may be integrated to implement the input and output functions of the mobile device. For example, the image output unit 2011 may display various graphical user interfaces (English full name: Graphical User Interface, GUI for short) to use the graphical user interfaces as virtual control components, including but not limited to a window, a scroll bar, an icon, and a scrapbook, so that a user performs an operation in a touch manner.

In a specific implementation of the present invention, the image output unit 2011 includes a filter and an amplifier that are configured to filter and amplify a video output by the processor 203. The sound output unit 2012 includes a digital-to-analog converter that is configured to convert, from a digital format to an analog format, an audio signal output by the processor 203.

The processor 203 is configured to run corresponding code and process received information to generate and output a corresponding interface.

Specifically, the processor 203 is a control center of the mobile device, and connects all parts of the entire mobile device by using various interfaces and lines. The processor 203 runs or executes a software program and/or a module that are/is stored in the memory, and invokes data stored in the memory, to perform various functions of the mobile device and/or data processing. The processor 203 may include an integrated circuit (English full name: Integrated Circuit, IC for short), for example, may include a single packaged IC, or may include a plurality of packaged ICs that are connected and with a same function or different functions.

For example, the processor 203 may include merely a central processing unit (English full name: Central Processing Unit, CPU for short), or may be a combination of a graphics processing unit (English full name: Graphics Processing Unit, GPU for short), a digital signal processor (English full name: Digital Signal Processor, DSP for short), and a control chip (for example, a baseband chip) in the communications unit. In an implementation of the present invention, the CPU may include a single operation core, or may include a plurality of operation cores.

The memory 204 is configured to store code and data, and the code is run by the processor 203.

Specifically, the memory 204 may be configured to store a software program and a module, and the processor 203 runs the software program and the module that are stored in the memory 204, to perform various functional applications of the mobile device and implement data processing. The memory 204 mainly includes a program storage area and a data storage area. The program storage area may store an operating system and an application that is required by at least one function, for example, a sound playing program or an image playing program. The data storage area may store data (for example, audio data or a phonebook) created based on use of the mobile device, and the like.

In a specific implementation of the present invention, the memory 204 may include a volatile memory, for example, a nonvolatile dynamic random access memory (English full name: Nonvolatile Random Access Memory, NVRAM for short), a phase change random access memory (English full name: Phase Change RAM, PRAM for short), or a magneto-resistive random access memory (English full name: Magneto-resistive RAM, MRAM for short); or may further include a nonvolatile memory, for example, at least one disk storage device, at least one electrically erasable programmable read-only memory (English full name: Electrically Erasable Programmable Read-Only Memory, EEPROM for short), or at least one flash memory device such as a NOR flash memory (English full name: NOR flash memory) or an NAND flash memory (English full name: NAND flash memory).

The nonvolatile memory stores an operating system and an application that are executed by the processor 203. The processor 203 loads a running program and data from the nonvolatile memory to the memory, and stores digital content in massive storage apparatuses. The operating system includes various components and/or drives that are configured to control and manage regular system tasks such as memory management, storage device control, and power management, and that facilitate communication between various software and hardware.

In an implementation of the present invention, the operating system may be an Android operating system from Google, an iOS system developed by Apple, a Windows operating system developed by Microsoft, or an embedded operating system such as VxWorks.

The application includes any application that has been installed on the mobile device, including but not limited to a browser, an email, an instant messaging service, word processing, a virtual keyboard, a window widget (Widget), encryption, digital copyright management, speech recognition, speech reproduction, positioning (for example, a function provided by a Global Positioning System), music playing, and the like.

The input unit 205 is configured to: implement interaction between the user and the mobile device, and/or input information to the mobile device.

For example, the input unit 205 may receive digit or character information entered by the user, to generate signal input related to user configuration or function control. In a specific implementation of the present invention, the input unit 205 may be a touchscreen, may be another man-machine interface such as a substantive input key or a microphone, or may be another external information obtaining apparatus such as a camera.

The touchscreen in this embodiment of the present invention may collect an operation action of touching or approaching the touchscreen by the user, for example, an operation action performed by the user on the touchscreen or in a position near the touchscreen by using any suitable object or accessory such as a finger or a stylus, and drive a corresponding connected apparatus based on a preset program. Optionally, the touchscreen may include two parts: a touch detection apparatus and a touch controller. The touch detection apparatus detects a touch operation of the user, converts the detected touch operation into an electrical signal, and transmits the electrical signal to the touch controller. The touch controller receives the electrical signal from the touch detection apparatus, converts the electrical signal into touch point coordinates, and then sends the touch point coordinates to the processor 203.

The touch controller may further receive and execute a command sent by the processor 203. In addition, the touchscreen may be implemented in a plurality of types, for example, a resistive type, a capacitive type, an infrared ray, and a surface acoustic wave.

In another implementation of the present invention, the substantive input key used in the input unit 205 may include but is not limited to one or more of a physical keyboard, a function key (such as a volume control key or an on/off key), a trackball, a mouse, a joystick, and the like. The input unit 205 in a form of a microphone may collect a voice entered by the user or an environment, and convert the voice into a command that is in an electrical signal form and that can be executed by the processor 203.

In some other implementations of the present invention, the input unit 205 may also be various types of sensor devices, for example, a Hall device, configured to sense a physical quantity of the mobile device, for example, force, torque, pressure, stress, a location, displacement, a speed, an acceleration, an angle, an angular velocity, a quantity of revolutions, a rotational speed, and a time at which an operating status changes, and convert the physical quantity into an electric quantity for detection and control. Some other sensor devices may further include a gravity sensor, a tri-axis accelerometer, a gyroscope, an electronic compass, an ambient light sensor, a proximity sensor, a temperature sensor, a humidity sensor, a pressure sensor, a heart rate sensor, a fingerprint sensor, and the like.

The communications unit 207 is configured to establish a communications channel, so that the mobile device is connected to a remote server by using the communications channel and downloads media data from the remote server. The communications unit 207 may include a communications module such as a wireless local area network (English full name: Wireless Local Area Network, wireless LAN for short) module, a Bluetooth module, and a baseband module, and a radio frequency (English full name: Radio Frequency, RF for short) circuit corresponding to the communications module. The communications unit 207 is configured to perform wireless local area network communication, Bluetooth communication, infrared communication, and/or communication in a cellular communications system, for example, Wideband Code Division Multiple Access (English full name: Wideband Code Division Multiple Access, W-CDMA for short) and/or High Speed Downlink Packet Access (English full name: High Speed Downlink Packet Access, HSDPA for short). The communications module is configured to control communication between all components in the mobile device, and can support direct memory access.

In different implementations of the present invention, the various communications modules in the communications unit 207 usually exist in a form of an integrated circuit chip (English full name: Integrated Circuit Chip), and may be selectively combined without a need to include all communications modules and corresponding antenna groups. For example, the communications unit 207 may include merely a baseband chip, a radio frequency chip, and a corresponding antenna to provide a communication function in a cellular communications system. The mobile device may be connected to a cellular network (English full name: Cellular Network) or the Internet by using a wireless communication connection established by the communications unit 207, for example, wireless local area network access or WCDMA access. In some optional implementations of the present invention, the communications module such as the baseband module in the communications unit 207 may be integrated into the processor 203. A typical example is an APQ+MDM series platform provided by Qualcomm (Qualcomm).

The radio frequency circuit 208 is configured to receive and send information, or receive and send a signal during a call. For example, after downlink information from a base station is received, the downlink information is sent to the processor 203 for processing. In addition, in a design, uplink data is sent to the base station. Usually, the radio frequency circuit 208 includes a known circuit configured to implement these functions, and includes but is not limited to an antenna system, a radio frequency transceiver, one or more amplifiers, a tuner, one or more oscillators, a digital signal processor, a codec (Codec) chip group, a subscriber identity module (SIM) card, a memory, and the like. In addition, the radio frequency circuit 208 may communicate with a network and another device through wireless communication.

The wireless communication may use any communications standard or protocol, including but not limited to a Global System for Mobile Communications (English full name: Global System for Mobile Communications, GSM for short), a general packet radio service (English full name: General Packet Radio Service, GPRS for short), Code Division Multiple Access (English full name: Code Division Multiple Access, CDMA for short), Wideband Code Division Multiple Access (English full name: Wideband Code Division Multiple Access, WCDMA for short), a High Speed Uplink Packet Access (English full name: High Speed Uplink Packet Access, HSUPA for short) technology, Long Term Evolution (English full name: Long Term Evolution, LTE for short), an email, a short message service (English full name: Short Message Service, SMS for short), and the like.

The power supply 209 is configured to supply power to different components of the mobile device to maintain running of the different components. Generally, the power supply 209 may be a built-in battery, for example, a common lithium-ion battery or a NiMH battery, or may include an external power supply such as an AC adapter that directly supplies power to the mobile device. In some implementations of the present invention, the power supply 209 may also be widely defined, for example, may further include a power management system, a charging system, a power failure detection circuit, a power converter or inverter, a power status indicator (for example, a light emitting diode), and any other components related to generation, management, and distribution of electric energy in the mobile device.

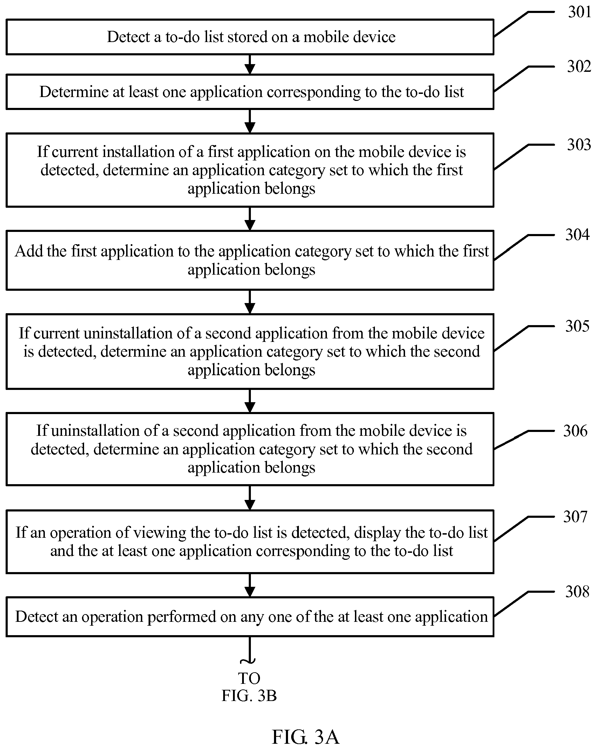

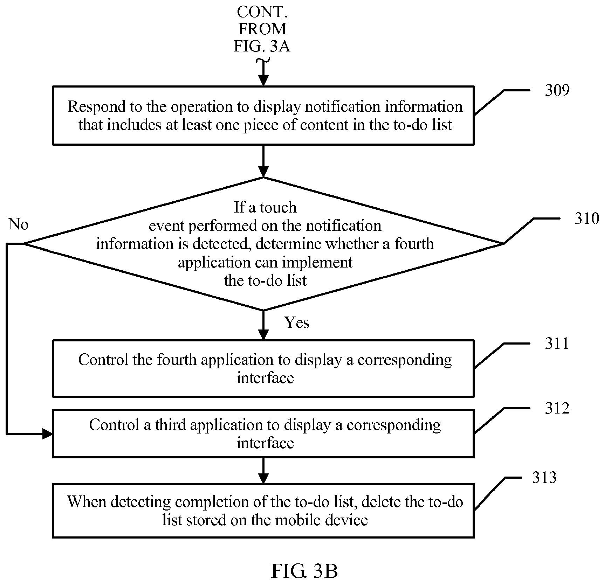

With reference to FIG. 3A and FIG. 3B, the following describes an information reminder method according to an embodiment. FIG. 3A and FIG. 3B are a flowchart of steps of an information reminder method according to an embodiment of the present invention.

Step 301. A mobile device detects a to-do list stored on the mobile device.

Specifically, an application that can store the to-do list may be a system application of the mobile device or a third-party application that is downloaded based on a user operation. The application storing the to-do list is not limited in this embodiment. For example, the application storing the to-do list is a calendar, a memo, a note, or the like.

This embodiment is described by using an example in which the application storing the to-do list is a memo.

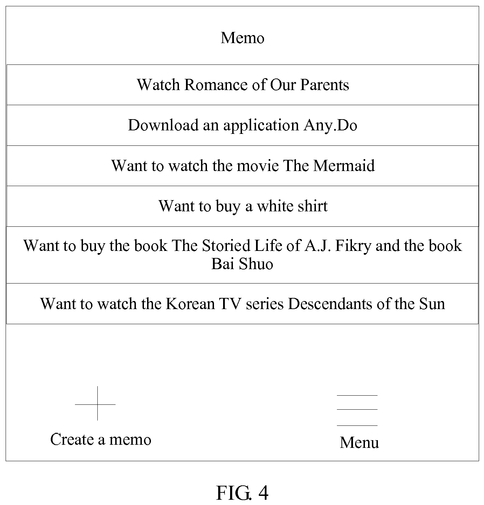

As shown in FIG. 4, a user may record a to-do list in the memo. It can be learned from FIG. 4 that the user may store the to-do list in the memo.

Specifically, the to-do list in this embodiment may not include a reminder time and a reminder location.

The memo in this embodiment may automatically provide access permission, so that a system of the mobile device and another application that has been installed on the mobile device obtain the to-do list stored in the memo.

Certainly, alternatively, the memo may push an operation interface to the user, and the user sets, by using the operation interface, whether to provide access permission on the memo.

It should be noted that a manner of storing the to-do list is not limited in this embodiment.

For example, the to-do list is stored in a form of text.

Specifically, the user may enter the to-do list in the memo by using a virtual keyboard displayed on a screen of the mobile device, or the user may enter the to-do list in the memo by using an external keyboard connected to the mobile device, or the user may enter the to-do list by entering a touch event on a screen of the mobile device.

For another example, the to-do list is stored in a form of a picture.

Specifically, the user may download or take a photo of a picture that includes the to-do list.

If the user wants to watch the movie The Mermaid, the user may download a poster of The Mermaid, and store the downloaded poster of The Mermaid in the memo, or the user photographs a picture that includes characters of The Mermaid, to store the picture in the memo.

The memo can analyze the stored picture to extract the to-do list.

For another example, the to-do list is stored in a form of a voice.

Specifically, the user may invoke a sound recording function of the mobile device by using the memo; and perform, by using the sound recording function, sound recording on the to-do list entered by the user by using a voice, to form a to-do audio file.

The memo can analyze the stored to-do audio file to obtain the to-do list.

This embodiment is described by using an example in which the to-do list is stored in a form of text.

Optionally, the mobile device in this embodiment can receive setting information entered by the user, and the setting information is used to indicate a time period in which the user is reminded of the to-do list.

For example, the user may set, to 8:00 to 15:00 by using the setting information, the time period in which the user is reminded of the to-do list. In this case, the method in this embodiment can implement a to-do list reminder procedure from 8:00 to 15:00.

Optionally, the user may further enter, by using the setting information, information about whether the user is to be repeatedly reminded of the to-do list.

For example, if the user enters, by using the setting information, information that the user needs to be repeatedly reminded of the to-do list, a to-do list reminder procedure in this embodiment is implemented from 8:00 to 15:00 every day.

Further, optionally, the user may set a repetition time period by using the setting information. For example, a to-do list reminder procedure in this embodiment is implemented from 8:00 to 15:00 from Monday to Friday.

Step 302. The mobile device determines at least one application corresponding to the to-do list.

To accurately determine the at least one application corresponding to the to-do list, in this embodiment, the to-do list stored in the memo needs to be analyzed to obtain at least one piece of content included in the to-do list, so that the at least one application corresponding to the to-do list can be determined based on the at least one piece of content included in the to-do list.

Optionally, the to-do list may be analyzed by the memo.

Further, optionally, the to-do list may be analyzed by the system of the mobile device.

This embodiment is described by using an example in which the system of the mobile device analyzes the to-do list to obtain the at least one piece of content included in the to-do list. It should be noted that, for a process in which the memo analyzes the to-do list, refer to the following process in which the system of the mobile device analyzes the to-do list. Details are not described in this embodiment.

Specifically, the system of the mobile device can analyze, based on a Natural Language Processing (English full name: Natural Language Processing, NLP for short) technology in artificial intelligence, the to-do list stored in the memo, to obtain the at least one piece of content.

More specifically, the system of the mobile device can automatically perform, by using the NLP technology, an operation such as extraction, filtering, retrieval, and analysis on a keyword in a natural language of the to-do list, so that the at least one piece of content included in the to-do list can be determined.

An association relationship between the to-do list and an application can be established by using the at least one piece of content included in the to-do list.

Specifically, the at least one application is an application that has been installed on the mobile device, and any one of the at least one application is an application required to complete the to-do list.

The following describes in detail, with reference to various application scenarios, a manner of determining the to-do list and the application used to complete the to-do list.

### First application scenario:

In this application scenario, for example, the mobile device stores a plurality of to-do lists. In this application scenario, the system of the mobile device can analyze each to-do list to determine at least one application corresponding to each to-do list.

Specifically, for example, as shown in FIG. 4, if the to-do list stored in the memo is "Download an application Any.Do", the system of the mobile device analyzes the to-do list based on the NLP technology to determine that content included in the to-do list is "download" and "an application Any.Do". The system of the mobile device can learn, through analysis, that the content "download" is a verb, and that the content "an application Any.Do" is a name of an application. In this case, the system of the mobile device comprehensively understands that the to-do list is needing to "download" an application program "Any.Do". Then, the system of the mobile device can determine that "App Store" can implement application download, and therefore the system of the mobile device can determine that "App Store" is an application corresponding to the to-do list.

In this application scenario, an example in which the to-do list includes a verb is used. It should be noted that the content included in the to-do list may include no verb, provided that the mobile device can determine a corresponding application based on the content included in the to-do list. The specific included content is merely an example for illustrative purposes in this embodiment.

For another example, if the to-do list stored in the memo is "Want to watch the Korean TV series Descendants of the Sun", the system of the mobile device analyzes the to-do list based on the NLP technology to determine that content included in the to-do list is "watch" and "Descendants of the Sun". The system of the mobile device can learn, through analysis, that the content "watch" is a verb, and that the content "Descendants of the Sun" is a name of the TV series. In this case, the system of the mobile device comprehensively understands that the to-do list is playing "Descendants of the Sun" by using an application used to watch a video. Then, the system of the mobile device can determine that an application corresponding to the to-do list is "iQiyi", "Youku", or the like.

After analyzing all the to-do lists stored in the mobile device, the system of the mobile device can establish a first list based on at least one piece of content included in the to-do lists. The first list establishes a correspondence between each to-do list and an application.

FIG. 4 shows an example of a storage status of the memo in this application scenario. In this case, for the first list, refer to Table 1.

**Table 1**

| **To-do list** | **Content included in the to-do list** | **Application corresponding to the to-do list** |
|---|---|---|
| Watch Romance of Our Parents | "Watch" and "Romance of Our Parents" | Youku, Tudou, iQiyi, and Tencent |
| Download an application Any.Do | "Download" and "an application Any.Do" | App Store |
| Watch the movie The Mermaid | "Watch" and "The Mermaid" | Youku, Tudou, iQiyi, and Tencent |
| Want to buy a white shirt | "Buy" and "shirt" | Dangdang and Taobao |
| Want to buy the book The Storied Life of A.J. Fikry and the book Bai Shuo | "Buy", "the book The Storied Life of A.J. Fikry", and "the book Bai Shuo" | Dangdang, Amazon, and Taobao |
| Want to watch the Korean TV series Descendants of the Sun | "Watch" and "the Korean TV series Descendants of the Sun" | Youku, Tudou, iQiyi, and Tencent |

The system of the mobile device can determine, based on the first list, the application corresponding to each to-do list.

### Second application scenario:

In this application scenario, for example, the mobile device stores a plurality of to-do lists. In this application scenario, the system of the mobile device can analyze each to-do list to create at least one to-do list category set.

Specifically, the to-do list category set includes at least one to-do list.

More specifically, the system of the mobile device analyzes the to-do lists stored in the mobile device, determines requirements of the to-do lists based on at least one piece of content included in the to-do lists, and creates the to-do list category set based on the requirements of the to-do lists, so that all the to-do lists in the same to-do list category set have a same requirement.

The system of the mobile device determines at least one target application corresponding to a target to-do list category set. The target to-do list category set is any one of the at least one created to-do list category set, and the target application is an application required to complete at least one to-do list in the target to-do list category set.

For example, as shown in FIG. 4, content of a to-do list of watching the movie The Mermaid is "watch" and "The Mermaid", and content of a to-do list of wanting to watch the Korean TV series Descendants of the Sun is "watch" and "the Korean TV series Descendants of the Sun". In this case, it can be learned that a requirement of the to-do list of watching the movie The Mermaid and that of the to-do list of wanting to watch the Korean TV series Descendants of the Sun are both invoking a video application to play a video file. Therefore, the to-do list of watching the movie The Mermaid and the to-do list of wanting to watch the Korean TV series Descendants of the Sun may be in a same to-do list category set.

Further, for example, as shown in FIG. 4, content of a to-do list of wanting to buy a white shirt is "buy" and "shirt", and content of a to-do list of wanting to buy the book The Storied Life of A.J. Fikry and the book Bai Shuo is "buy", "the book The Storied Life of A.J. Fikry", and "the book Bai Shuo". In this case, it can be learned that a requirement of the to-do list of wanting to buy a white shirt and that of the to-do list of wanting to buy the book The Storied Life of A.J. Fikry and the book Bai Shuo are both invoking a shopping application. Therefore, the to-do list of wanting to buy a white shirt and the to-do list of wanting to buy the book The Storied Life of A.J. Fikry and the book Bai Shuo may be in a same to-do list category set.

After analyzing all the to-do lists stored in the mobile device, the system of the mobile device can establish a second list based on to-do list category sets in which the to-do lists are located. The second list establishes a correspondence between each to-do list category set and an application.

FIG. 4 shows an example of a storage status of the memo in this application scenario. In this case, for the second list, refer to Table 2.

**Table 2**

| **To-do list included in a to-do list category set** | **Application corresponding to the to-do category set** |
|---|---|
| Watch Romance of Our Parents, and want to watch the Korean TV series Descendants of the Sun | Youku, Tudou, iQiyi, and Tencent |
| Want to buy a white shirt, and want to buy the book The Storied Life of A.J. Fikry and the book Bai Shuo | Dangdang, Amazon, and Taobao |
| Download an application Any.Do | App Store |

The system of the mobile device can determine, based on the second list, the application corresponding to each to-do list set.

In this application scenario, to determine the application corresponding to the to-do list, the system of the mobile device may first determine a target to-do list category set in which the to-do list is located, and the application corresponding to the to-do list is a target application corresponding to the target to-do list category set.

For example, if an application corresponding to the to-do list of watching Romance of Our Parents needs to be determined, the system of the mobile device queries the second list to determine a target to-do list category set in which the to-do list of watching Romance of Our Parents is located. The target to-do list category set includes the to-do lists of watching Romance of Our Parents and wanting to watch the Korean TV series Descendants of the Sun. According to the second list, it can be learned that applications corresponding to the target to-do list category set are Youku, Tudou, iQiyi, and Tencent. In this case, it can be determined that the applications corresponding to the to-do list of watching Romance of Our Parents are Youku, Tudou, iQiyi, and Tencent.

### Third application scenario:

In this application scenario, the system of the mobile device first creates at least one application category set.

The application category set includes at least one application that has been installed on the mobile device, and applications in the same application category set are used to implement a same function.

For example, the mobile device may arrange applications Youku, Tudou, iQiyi, and Tencent into a same application category set because the applications Youku, Tudou, iQiyi, and Tencent are used to implement a video playing function.

In this application scenario, for example, the mobile device stores a plurality of to-do lists. In this application scenario, the system of the mobile device can determine a target application category set that matches the at least one piece of content included in the to-do list.

Any one of at least one application included in the target application category set is corresponding to the to-do list.

FIG. 4 shows an example of a storage status of the memo in this application scenario. In this case, for the third list, refer to Table 3.

**Table 3**

| **Application included in an application category set** | **To-do list corresponding to the application category set** |
|---|---|
| Youku, Tudou, iQiyi, and Tencent | Watch Romance of Our Parents, and want to watch the Korean TV series Descendants of the Sun |
| Dangdang, Amazon, and Taobao | Want to buy a white shirt, and want to buy the book The Storied Life of A.J. Fikry and the book Bai Shuo |
| App Store | Download an application Any.Do |

The third list shown in Table 3 is used as an example. The system of the mobile device can classify applications installed on the mobile device. If the created application category list set includes applications Youku, Tudou, iQiyi, and Tencent, it indicates that the application category set is used to implement a video playing function. If the created application category set includes applications Dangdang, Amazon, and Taobao, it indicates that the application category set is used to implement a shopping function. If the created application category set includes an application App Store, it indicates that the application category set is used to implement an application download function.

The mobile device may match, with a requirement of the to-do list stored on the mobile device, a function that can be implemented by each application category set, to establish a correspondence between the to-do list and the application category set.

For example, the to-do list is watching Romance of Our Parents. Obtained content of the to-do list of watching Romance of Our Parents is "watch" and "Romance of Our Parents". In this case, the system of the mobile device may determine that an application category set with a video playing function is a target application category set, and applications Youku, Tudou, iQiyi, and Tencent in the target application category set are separately corresponding to the to-do list of watching Romance of Our Parents.

For another example, the to-do list is buying the book The Storied Life of A.J. Fikry and the book Bai Shuo. Obtained content of the to-do list of buying the book The Storied Life of A.J. Fikry and the book Bai Shuo is "buy". In this case, the system of the mobile device may determine that an application category set with a shopping function is a target application category set, and applications Dangdang, Amazon, and Taobao in the target application category set are separately corresponding to the to-do list of buying the book The Storied Life of A.J. Fikry and the book Bai Shuo.

### Fourth application scenario:

In this application scenario, the system of the mobile device also creates an application category set. For a specific process of creating the application category set, refer to the third application scenario. Details are not described in this application scenario again.

In this application scenario, the system of the mobile device may further create a to-do list category set. For a specific process of creating the to-do list category set, refer to the second application scenario. Details are not described in this application scenario again.

A correspondence between the application category set and the to-do list category set is established based on a function that can be implemented by the created application category set and a requirement of the created to-do list category set, and a fourth list is created based on the correspondence between the application category set and the to-do list category set.

For example, if a function that can be implemented by an application category set is music, the application category set is corresponding to a to-do list category set whose function requirement is playing a song. The to-do list category set whose requirement is playing a song may include to-do lists of wanting to listen to A-lin's songs and wanting to listen to Blown Away.

For another example, if a function that can be implemented by an application category set is a restaurant, the application category set is corresponding to a to-do list category set whose function requirement is dining. The to-do list category set whose requirement is dining may include wanting to go to Hai Di Lao and going to Quanjude.

The following describes the fourth list with reference to Table 4.

**Table 4**

| **Application included in an application category set** | **Function that can be implemented by the application category set** | **To-do list included in a to-do list category set** | **Function required by the to-do list category set** |
|---|---|---|---|
| Youku, Tudou, iQiyi, and Tencent | Video playing | Watch Romance of Our Parents, and want to watch the Korean TV series Descendants of the Sun | Watching a movie, and watching a TV series |
| Dangdang, Amazon, and Taobao | Shopping | Want to buy a white shirt, and want to buy the book The Storied Life of A.J. Fikry and the book Bai Shuo | Buying clothes, and buying a book |
| iReader and Dangdang | Book reading | Want to read The Graver Robbers' Chronicles, and want to read Currency Wars | Reading a book |
| Dianping, Baidu Nuomi, and Meituan | Restaurant | Want to go to Hai Di Lao, and go to Quanjude | Dining |
| Xiami Music, NetEase Cloud Music, and Baidu Music | Music | Want to listen to A-lin's songs, and want to listen to Blown Away | Playing a song |

A specific process of determining the at least one application corresponding to the to-do list in this embodiment is described by using the fourth application scenario as an example.

It should be noted that, the description of the specific process of determining the application corresponding to the to-do list in this embodiment is an optional example, and is not specifically limited.

This embodiment is described by using the fourth application scenario as an example.

Step 303. If the mobile device detects installation of a first application on the mobile device, the mobile device determines an application category set to which the first application belongs.

The application category set to which the first application belongs is any one of the at least one created application category set, and a function that can be implemented by the first application is the same as a function that can be implemented by any application in the application category set to which the first application belongs.

Specifically, when detecting current installation of the first application, the system of the mobile device triggers execution of step 303, so that the system of the mobile device can determine the function that can be implemented by the first application. For example, if the first application that is installed is TTPlayer, the mobile device may detect that a function that can be implemented by TTPlayer is music.

Step 304. The mobile device adds the first application to the application category set to which the first application belongs.

In this embodiment, the application category set to which the first application belongs can be determined based on the function that can be implemented by the first application.

In the example in step 303, if the mobile device detects that the function that can be implemented by the first application is music, the mobile device may detect whether there is a created application category set that can implement a music function. In this example, the mobile device can determine that an application category set that includes applications Xiami Music, NetEase Cloud Music, and Baidu Music can implement the music function. In this case, the mobile device may add the application TTPlayer to the application category set that can implement the music function.

Step 305. If the mobile device detects uninstallation of a second application from the mobile device, the mobile device determines an application category set to which the second application belongs.

In this embodiment, when detecting current uninstallation of the second application, the mobile device triggers execution of step 305, so that the mobile device determines the application category set to which the second application belongs.

For example, if the mobile device detects download of an application NetEase Cloud Music, the mobile device determines an application category set to which NetEase Cloud Music belongs.

Step 306. The mobile device deletes the second application from the application category set to which the second application belongs.

In the example in step 305, the mobile device may determine to delete the uninstalled NetEase Cloud Music from the application category set to which NetEase Cloud Music belongs.

Specifically, for example, as shown in Table 4, before the deletion, the application category set to which NetEase Cloud Music belongs includes Xiami Music, NetEase Cloud Music, and Baidu Music. After the deletion, the application category set to which NetEase Cloud Music belongs includes Xiami Music and Baidu Music.

It should be noted that step 303 to step 304 and step 305 to step 306 in this embodiment are not performed in a particular time sequence.

Step 307. If the mobile device detects an operation of viewing the to-do list, the mobile device displays the to-do list and the at least one application corresponding to the to-do list.

Step 307 and step 303 to step 306 in this embodiment are not performed in a particular time sequence.

In this embodiment, if the user needs to view the to-do list, the user may enter an operation of viewing the to-do list.

Optionally, the operation of viewing the to-do list may be tapping, by the user, an icon of the memo that stores the to-do list and that is on the mobile device.

Optionally, the operation of viewing the to-do list may be entering, by the user, a voice that can open the memo. For example, the voice is "Open the memo". The user may enter the voice of "Open the memo" to a microphone of the mobile device, so that the memo can start running based on the voice entered by the user.

After the operation, entered by the user, of viewing the to-do list is received, an application interface of the memo is displayed on a screen of the mobile device.

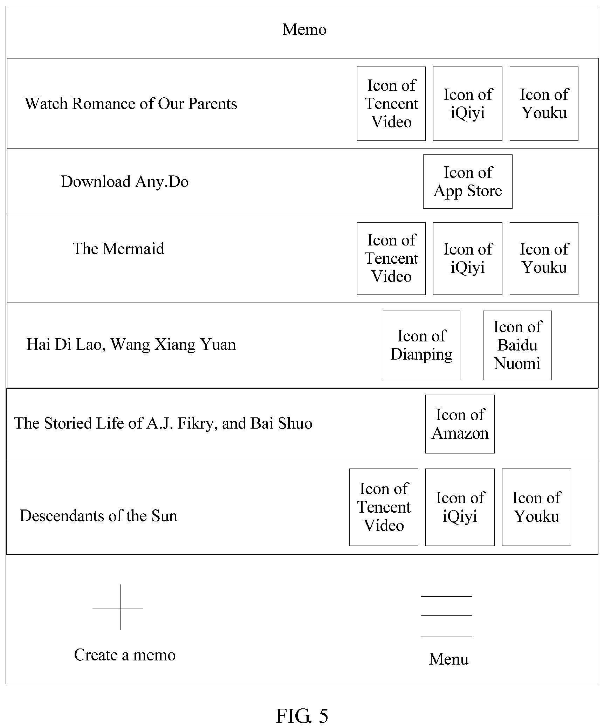

For details about the application interface of the memo, refer to FIG. 5. The application interface of the memo displays the to-do list and an icon of an application that can implement a requirement of the to-do list.

As shown in FIG. 5, icons of applications Tencent Video, iQiyi, and Youku that can implement a requirement of the to-do list of The Mermaid are displayed correspondingly for the to-do list of The Mermaid.

Step 307 in this embodiment enables the user to view, at any time based on a requirement, all the to-do lists stored in the mobile device and the applications corresponding to the to-do lists.

Optionally, the memo in this embodiment can further receive deletion instruction information entered by the user, and the memo can execute, based on the deletion instruction information, a procedure for deleting the application corresponding to the to-do list.

For example, if the user is a member of the application iQiyi, The Mermaid is played by using iQiyi when the user wants to watch The Mermaid. In this case, the user may enter deletion instruction information to Tencent Video and Youku Video that are corresponding to the to-do list of The Mermaid, and then the system of the mobile device may re-modify an application corresponding to the to-do list of The Mermaid, so that after the modification, the application corresponding to the to-do list of The Mermaid is iQiyi only.

The deletion instruction information in this embodiment may be touching and holding an application icon for a time period not less than a preset time period. For example, if the user touches and holds Tencent Video for a time period not less than 3 seconds, the mobile device may delete an icon of Tencent Video corresponding to the to-do list of The Mermaid in FIG. 5.

Optionally, the memo in this embodiment can further receive change instruction information entered by the user, and the memo can execute, based on the change instruction information, a procedure for changing the application corresponding to the to-do list.

For example, as shown in FIG. 5, applications corresponding to the to-do list "The Mermaid" are Tencent Video, iQiyi, and Youku. However, the user does not want to watch the movie on a network. In this case, the user may enter a change instruction to the memo, so that the to-do list "The Mermaid" is corresponding to an application Baidu Nuomi, and accordingly the user can buy a movie ticket of "The Mermaid" by using Baidu Nuomi.

Step 308. The mobile device detects an operation performed on any one of the at least one application.

The mobile device detects, in real time, whether an application meeting a preset requirement exists in the current mobile device.

In this embodiment, the preset requirement is: An application is installed on the mobile device, the application is corresponding to the to-do list stored on the mobile device, and the application receives an operation performed by the user on the application.

For example, the mobile device detects that an application Tencent Video meets the preset requirement. To be specific, Tencent Video is an application that has been installed on the mobile device, Tencent Video is corresponding to the to-do list of watching The Mermaid stored in the mobile device, and Tencent Video receives an operation performed by the user on Tencent Video.

The operation performed by the user on the application corresponding to the to-do list is not limited in this embodiment.

For example, the operation is touching an icon of the application corresponding to the to-do list for a time not less than a preset time threshold.

A value of the time threshold is not limited in this embodiment. In this embodiment, for example, the time threshold is 2 seconds.

For another example, the operation is touching an icon of the application corresponding to the to-do list by using a force not less than a preset force threshold.

In this embodiment, a pressure sensor is built in the mobile device. The pressure sensor can obtain the force of touching, by the user, the icon of the application corresponding to the to-do list. If the mobile device determines, by using data reported by the pressure sensor, that the force of touching, by the user, the icon of the application corresponding to the to-do list is not less than the preset force threshold, the mobile device determines the operation performed by the user on the icon of the application corresponding to the to-do list.

A value of the preset force threshold is not limited in this embodiment.

For another example, the operation is touching an icon of the application corresponding to the to-do list, where a distance between the icon and a touch entity is not greater than a preset distance threshold.

In this embodiment, a distance sensor is built in the mobile device. The distance sensor can obtain the distance between the touch entity and the icon of the application corresponding to the to-do list. If the mobile device determines, by using data reported by the distance sensor, that the distance between the touch entity and the icon of the application corresponding to the to-do list is not greater than the preset distance threshold, the mobile device determines the operation performed on the icon of the application corresponding to the to-do list.

A value of the preset distance threshold is not limited in this embodiment.

The touch entity in this embodiment may be a finger of the user, a capacitive stylus, or the like.

For another example, the operation is performing tapping.

Optionally, the tapping may be understood as follows: The mobile device detects that a tapping operation entered by the user is performed on an icon of the application corresponding to the to-do list.

Optionally, the tapping may be understood as follows: The mobile device detects that a tapping operation entered by the user is performed on a running interface of an application running in a background of the mobile device.

For another example, the operation is entering a target voice by the user. The target voice is used to enable a voice of the application corresponding to the to-do list.

Specifically, if the application corresponding to the to-do list is a calendar, and the user wants to enable the application calendar, the user may enter a target voice "Open the calendar" by using a microphone of the mobile device, so that the mobile device can enable the application calendar.

Step 309. The mobile device responds to the operation to display notification information that includes the at least one piece of content in the to-do list.

In this embodiment, all content of a to-do list corresponding to the operation or partial content of the to-do list corresponding to the operation may be displayed in response to the operation.

In this embodiment, for example, all content of the to-do list corresponding to the operation is displayed.

The following describes step 308 and step 309 by using specific application scenarios.

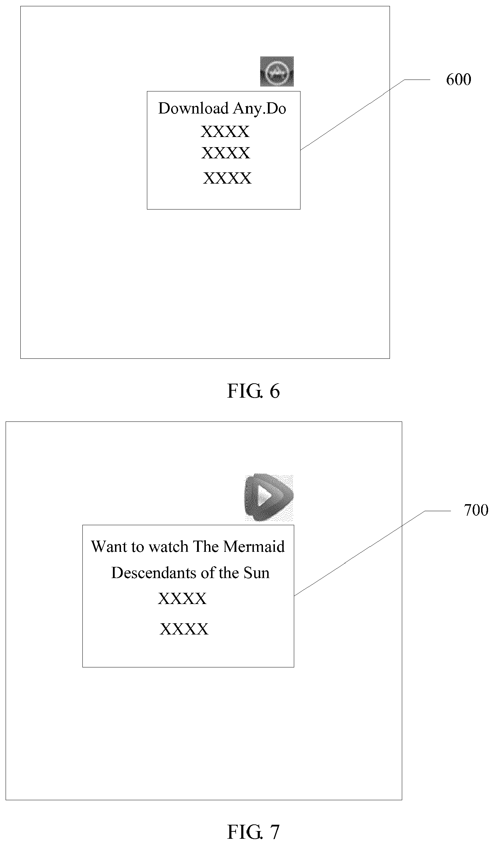

For example, as shown in FIG. 6, in an application scenario shown in FIG. 6, the application corresponding to the to-do list is "App Store".

If the pressure sensor in the mobile device determines that a force of touching an icon of "App Store" by the user is not less than the preset force threshold, the pressure sensor reports, to the mobile device, data used to indicate that the force of touching the icon of "App Store" by the user is not less than the preset force threshold.

The mobile device pops up, on a screen of the mobile device based on the data reported by the pressure sensor, a menu 600 corresponding to "App Store". The menu 600 displays the to-do list corresponding to the application "App Store".

It can be learned that, in this application scenario, if the user enters an operation to "App Store", "App Store" may automatically pop up the menu 600 to remind the user of the to-do list, recorded in the memo, of downloading an application Any.Do, so that the user can directly download the application Any.Do by using "App Store", to complete the to-do list of downloading the application Any.Do.

A component displayed on the menu 600 is not limited in this embodiment, provided that the menu 600 can display the to-do list.

For example, as shown in FIG. 7, in an application scenario shown in FIG. 7, the application corresponding to the to-do list is "Tencent Video".

If the pressure sensor in the mobile device determines that a force of touching an icon of "Tencent Video" by the user is not less than the preset force threshold, the pressure sensor reports, to the mobile device, data used to indicate that the force of touching the icon of "Tencent Video" by the user is not less than the preset force threshold.

The mobile device pops up a menu 700 on a screen of the mobile device based on the data reported by the pressure sensor. The menu 700 displays the to-do list corresponding to the application "Tencent Video".

It can be learned that, in this application scenario, if the user enters an operation to "Tencent Video", "Tencent Video" may automatically pop up the menu 700 to remind the user of the to-do list of watching The Mermaid and the to-do list of watching Descendants of the Sun that are recorded in the memo. In this case, the user may directly watch, by using "Tencent Video", a video file corresponding to the application.

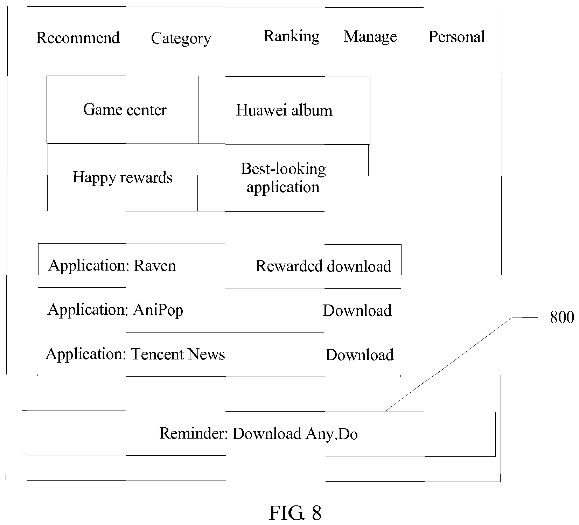

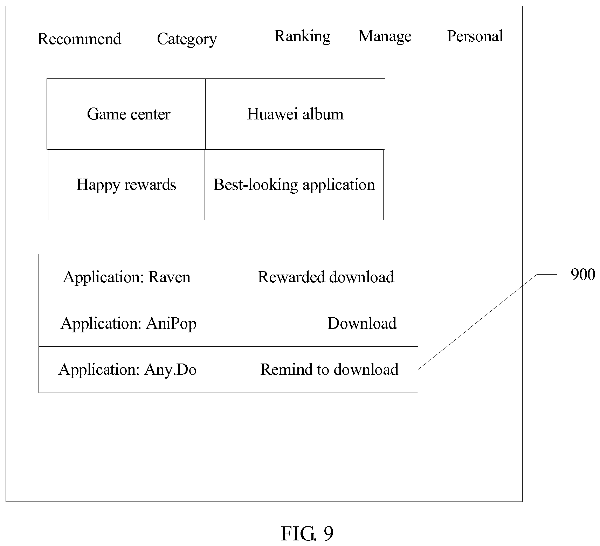

For example, as shown in FIG. 8 and FIG. 9, the application corresponding to the to-do list is "App Store".

If the mobile device determines an operation of tapping an icon of "App Store", the mobile device displays a home page of "App Store" on which the user performs the tapping operation. The home page includes the notification information that includes the at least one piece of content in the to-do list.

Specifically, as shown in FIG. 8, the home page of "App Store" may display a notification bar 800. A specific location of the notification bar 800 in the home page of "App Store" is not limited in this embodiment.

The notification bar 800 displays the to-do list that is of downloading an application Any.Do and corresponding to "App Store". In this case, the user may directly download the application Any.Do by using "App Store".

Specifically, as shown in FIG. 9, the mobile device may display, on the home page of "App Store", an operation interface 900 that can respond to a touch event entered by the user. The operation interface 900 displays the to-do list corresponding to the application, and the operation interface 900 can complete the corresponding to-do list based on the touch event entered by the user.

For example, as shown in FIG. 9, the operation interface 900 displays the to-do list that is of downloading an application Any.Do and corresponding to "App Store", and the mobile device reminds, by using the operation interface 900, the user to download the application Any.Do.

In this application scenario, the operation interface 900 displays a list of recommended downloaded applications on the home page of "App Store", if the operation interface 900 receives a touch event entered by the user, "App Store" can directly redirect from the currently displayed home page to an interface in which the application Any.Do can be downloaded.

It can be learned that, in the application scenario shown in FIG. 9, not only the user can be reminded of the to-do list, but also the operation interface including the to-do list can be generated. In addition, the corresponding to-do list is directly implemented when the operation interface receives the touch event entered by the user. In this way, an operation step required by the user to implement the to-do list is further reduced, and efficiency of the user in completing the to-do list is improved.

Certainly, in another application scenario, if the to-do list is listening to A-lin's songs, when the user taps an icon of "Baidu Music", the operation interface is displayed on a singer recommendation bar displayed on a home page of "Baidu Music", and "the singer A-lin" is displayed in the operation interface. If the user enters a touch event to the operation interface, "Baidu Music" redirects between interfaces, to be specific, redirects from the home page to an interface in which content corresponding to the singer A-lin is displayed.

In this embodiment, a to-do list corresponding to a currently operated application can be determined by performing step 309, and then the user may perform an operation on the application to complete a to-do list execution procedure.

For example, as shown in FIG. 7, the user can determine, by using the menu 700, that the user once recorded the to-do list of needing to watch The Mermaid. In this case, the user may open Tencent Video, and enter the keyword "The Mermaid" in a search bar, so that Tencent Video redirects from a home page to an interface in which The Mermaid is played.

In this application scenario, to improve operation efficiency of the user and further shorten duration required in a to-do list execution process, the mobile device continues to perform step 310.

Optionally, before step 309 in this embodiment is performed, the following steps may be further included.

Step 3090. The mobile device receives user identity information entered by a user.

Specifically, when the user records the to-do list on the memo of the mobile device, the mobile device may push an input interface to the user, so that the user can enter the user identity information by using the input interface.

Optionally, the mobile device may push, to the user, an input interface used for entering fingerprint information, so that the user can enter fingerprint information based on notification information in the input interface, and the mobile device can store, as the user identity information, the fingerprint information entered by the user.

Optionally, the mobile device may push, to the user, an input interface used for entering password information, so that the user can enter password information based on notification information in the input interface, and the mobile device can store, as the user identity information, the password information entered by the user.

Further, optionally, the user identity information may be audio information entered by the user, specific pattern information entered by the user on a display of the mobile device, or the like.

Step 3091. The mobile device receives identity authentication information entered by the user.

In this embodiment, when detecting an operation performed on any one of the at least one application, the mobile device instructs the user to enter the identity authentication information.

The identity authentication information may be fingerprint information, password information, audio information, or specific pattern information.

Step 3092. The mobile device determines whether the user identity information is consistent with the identity authentication information, and performs step 309 if the user identity information is consistent with the identity authentication information, or performs step 3094 if the user identity information is inconsistent with the identity authentication information.

In this embodiment, after the mobile device receives the identity authentication information entered by the user, the mobile device may invoke the stored user identity information, and determine whether the user identity information is consistent with the identity authentication information.

If the user identity information is consistent with the identity authentication information, it indicates that the user performing the operation on the application in step 308 is the same as the user entering the to-do list to the memo. In this case, the mobile device may continue to perform step 309.

It should be noted that the mobile device in this embodiment can receive at least one piece of user identity information.

In a specific application scenario, the mobile device can receive a plurality of pieces of different user identity information entered by a plurality of different users.

This application scenario is illustrated by using a scenario in which three different users are reminded of to-do lists by using a same mobile device.

For example, the mobile device can receive user identity information of a user A that is entered by the user A, receive user identity information of a user B that is entered by the user B, and receive user identity information of a user C that is entered by the user C.

In a process in which the user A enters a to-do list to a memo of the mobile device, the mobile device may determine a correspondence between an application and the to-do list entered by the user A.

In a process in which the user B enters a to-do list to the memo of the mobile device, the mobile device may determine a correspondence between an application and the to-do list entered by the user B.

In a process in which the user C enters a to-do list to the memo of the mobile device, the mobile device may determine a correspondence between an application and the to-do list entered by the user C.

In a process of performing step 3091, the mobile device can match currently received identity authentication information with the user identity information of the user A, the user identity information of the user B, and the user identity information of the user C. If the mobile device determines that the currently received identity authentication information is consistent with the user identity information of the user B, the mobile device performs a to-do list reminder procedure in this embodiment based on the correspondence between the application and the to-do list entered by the user B.

It can be learned that, according to the method in this embodiment, different to-do list reminder procedures can be performed for different users, so that information security is further improved. In addition, specific to-do list reminders can be provided for different users, so that inconvenience caused by an incorrect to-do list reminder to the users is prevented.

If the user identity information is inconsistent with the identity authentication information, it indicates that the user performing the operation on the application in step 308 is different from the user entering the to-do list to the memo.

Step 3093. The mobile device instructs the user to re-enter the identity authentication information.

In this embodiment, when the user performing the operation on the application is different from the user entering the to-do list to the memo, the application does not respond to the operation entered by the user, and the mobile device pushes notification information to the user. The notification information is used to instruct the user to re-enter the identity authentication information. In this case, the mobile device returns to perform step 3091.

Step 3094. If a quantity of targets is greater than or equal to a preset threshold, the mobile device does not display the notification information.

In this embodiment, the quantity of targets is a quantity of times identity authentication information entered by a user is successively inconsistent with the user identity information.

A value of the preset threshold is not limited in this embodiment. For example, the preset threshold is 5.

If the quantity of targets is greater than or equal to the preset threshold, the mobile device controls, not to display the notification information, the application that receives the operation entered by the user.

In other words, the application performs processing in a normal mode based on the operation entered by the user. For example, if the operation entered by the user is tapping an icon of the application, the application displays a home page, and the home page displayed on the application does not include the notification information. For another example, if the operation entered by the user is touching and holding an icon of the application, the application performs an uninstallation processing procedure. Details are not described herein.

Step 310. If the mobile device detects a touch event performed on the notification information, the mobile device determines whether a fourth application can implement the to-do list, and performs step 311 if the fourth application can implement the to-do list, or performs step 312 if the fourth application cannot implement the to-do list.

Specifically, in this embodiment, the mobile device may detect whether the notification information sent by the fourth application is received. If the notification information received by the fourth application is received, the mobile device may determine that the fourth application cannot implement the to-do list. If the mobile device does not receive the notification information sent by the fourth application, the mobile device may determine that the fourth application can implement the to-do list.

Specifically, the notification information is used to indicate that the fourth application cannot implement the to-do list. More specifically, if the fourth application cannot implement the to-do list, the fourth application may send the generated notification information to the mobile device, and the mobile device may determine, based on the notification information, that the fourth application cannot implement the to-do list.

For example, as shown in FIG. 7, if the fourth application is Tencent Video, the notification information "Descendants of the Sun" on the menu 700 receives a touch event entered by the user, and then the system of the mobile device determines whether Tencent Video can successfully play a video file "Descendants of the Sun".

In this application scenario, because Tencent Video is not granted copyright of playing "Descendants of the Sun", Tencent Video cannot implement the to-do list "Descendants of the Sun".

When it is determined that Tencent Video cannot perform playing to implement the to-do list "Descendants of the Sun", Tencent Video may send the notification information to the mobile device.

It should be further noted that a case in which the fourth application cannot implement the to-do list is not limited in this embodiment, for example, the user is not a registered user of the fourth application.

For example, as shown in FIG. 6, if the fourth application is App Store, the notification information "Download Any.Do" on the menu 600 receives a touch event entered by the user, and then the system of the mobile device determines whether App Store can successfully download the application Any.Do.

In this application scenario, because App Store can successfully download the application Any.Do, App Store can implement the to-do list of downloading Any.Do.

Step 311. The mobile device controls the fourth application to display a corresponding interface.

The corresponding interface displayed by the fourth application is an application interface in which the to-do list can be implemented.

In this embodiment, the application establishes a correspondence between the notification information and an address of the corresponding interface. When the notification information displayed on the application receives a touch event entered by the user, the application can directly redirect, based on the address that is of the corresponding interface and corresponding to the notification information, to display the corresponding interface.

In this step, if the notification information on the fourth application receives a touch event entered by the user, the fourth application can directly redirect, based on the address corresponding to the notification information, to display the corresponding interface.

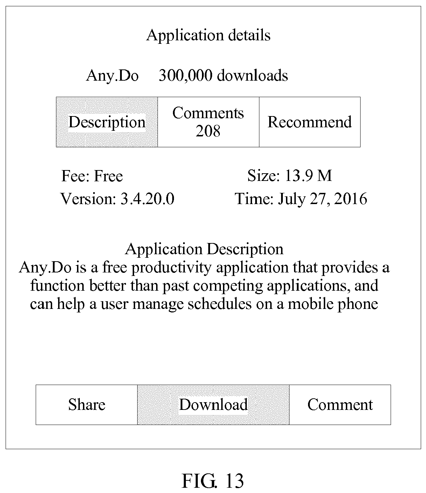

For example, as shown in FIG. 6, if the notification information of downloading Any.Do receives a touch event entered by the user, the application redirects from display content shown in FIG. 6 to display content shown in FIG. 13. As shown in FIG. 13, the fourth application can directly redirect to a running interface in which the application Any.Do is downloaded. In this case, the user can directly download the application Any.Do by using the running interface in which the application Any.Do is downloaded and that is displayed on the fourth application. For example, as shown in FIG. 13, after the user enters the touch event to the notification information of downloading Any.Do, in the interface displayed on the application and shown in FIG. 13, the user can obtain information corresponding to the application Any.Do, and can directly download the application Any.Do when entering a touch event to a download menu.

Step 312. The mobile device controls a third application to display a corresponding interface.

The third application is in the target application category set, and the third application and the fourth application are different applications.

For example, as shown in FIG. 7, if the application Tencent Video cannot implement the to-do list of Descendants of the Sun, the system of the mobile device determines the third application. The third application is in the target application category set to which the fourth application belongs. In other words, the third application and the fourth application are used to implement a same function. In this application scenario, the third application and the fourth application are both used to implement a video playing function.

In this application scenario, the system of the mobile device may determine that the third application is iQiyi. Because iQiyi has the copyright of playing a video Descendants of the Sun, when determining that Tencent Video cannot play Descendants of the Sun, the system of the device may directly control iQiyi to display a running interface in which the video Descendants of the Sun can be played. The user can directly play the video Descendants of the Sun by using the running interface displayed by iQiyi.

It should be noted that before step 312 in this embodiment, the following steps may be further included.

Step 3120. The mobile device generates a recommendation list.

In this embodiment, after step 311 is performed, the mobile device may generate the recommendation list if it is determined that the fourth application cannot implement the to-do list, and when no application that has been installed on the mobile device can implement the to-do list. The recommendation list includes information about at least one application that can implement the to-do list.

The application information may be a name and/or an icon of the application, and the mobile device establishes a correspondence between the application information and a download path used for downloading the application.

Specifically, the mobile device may obtain, from App Store, information about an application that can implement the to-do list, and store, in the recommendation list, the information about the application that can implement the to-do list.

For example, if the to-do list is "Descendants of the Sun", the mobile device may obtain, from App Store, information about an application that can successfully implement the to-do list "Descendants of the Sun". If obtained applications that can successfully implement the to-do list "Descendants of the Sun" are iQiyi and Youku, the mobile device may store names and download paths of iQiyi and Youku in the recommendation list.

In this embodiment, applications that can implement the to-do list and that are displayed in the recommendation list are sorted as follows:

The applications in the recommendation list are randomly sorted, or the applications in the recommendation list are sorted based on a quantity of downloads in descending order, or the applications in the recommendation list are sorted based on a quantity of favorable comments in descending order, or the like.

It should be noted that in this embodiment, description of a manner of sorting the applications in the recommendation list is optional, and no limitation is imposed thereto.

Step 3121. The mobile device determines the third application.

Specifically, the mobile device in this embodiment determines information about an application that is in the recommendation list and that receives a touch event entered by the user, and determines a download path corresponding to the information about the application that receives the touch event entered by the user, so as to download the application.

The mobile device determines that the downloaded application is the third application.

After the third application is determined, a process of performing step 312 can be performed. Details are not described in this step.

Step 313. When detecting completion of the to-do list, the mobile device deletes the to-do list stored on the mobile device.

After the system of the mobile device determines that the to-do list is implemented and completed by the corresponding application, the system of the mobile device may delete the implemented and completed to-do list.

A manner of determining completion of the to-do list is not limited in this embodiment. For example, if the to-do list is completed, the user may enter a deletion instruction to the memo, so that the memo deletes the corresponding to-do list based on the deletion instruction. For another example, the system of the mobile device can detect whether the to-do list is completed. For example, if the to-do list is buying a shirt, after determining that the user places an order on a shopping application, the system of the mobile device automatically determines that the to-do list is completed. If the to-do list is downloading Any.Do, after the system of the mobile device detects completed installation of Any.Do on the mobile device, the mobile device determines that the to-do list of downloading Any.Do is completed.

In a specific application scenario, if the system of the mobile device detects completed playing of the video Descendants of the Sun, the system of the mobile device may delete the to-do list of Descendants of the Sun stored in the memo. In this way, when the user enters an operation to an application used for video playing, the application does not display notification information used to notify the user of the to-do list of Descendants of the Sun.

The information reminder method in this embodiment has the following beneficial effects:
In this embodiment, for the to-do list that does not have a reminder time and does not include a specific reminder location, the user can be notified by using the application that can execute the to-do list, so that when the user enters an operation to the application, the application can automatically remind the user of the to-do list corresponding to the application, and accordingly the user can quickly execute the corresponding to-do list by using the application. In this way, a procedure and duration that are required by the user to execute the to-do list are reduced, and efficiency of the user in performing an operation on the to-do list is improved.

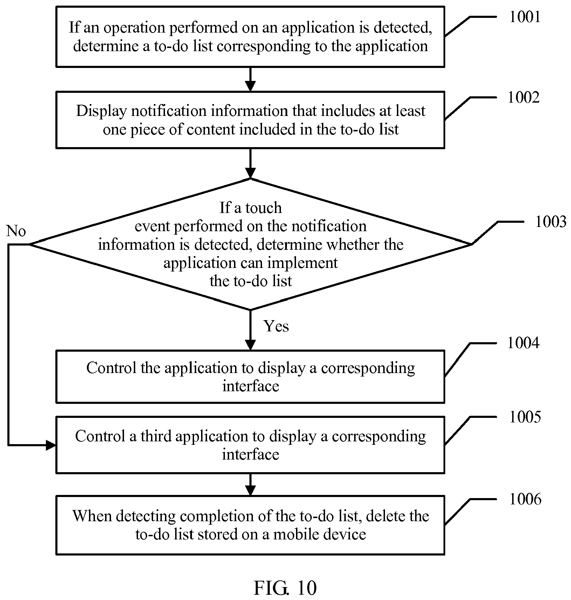

The following describes, with reference to FIG. 10, another embodiment that can provide an information reminder. In the embodiment shown in FIG. 3A and FIG. 3B, the system of the mobile device can establish in advance a correspondence between a to-do list and an application used to implement the to-do list. The following describes, with reference to FIG. 10, an information reminder method in which no correspondence between a to-do list and an application used to implement the to-do list needs to be established in advance.

As shown in FIG. 10, the information reminder method includes the following steps.

Step 1001. If a mobile device detects an operation performed on an application, the mobile device determines a to-do list corresponding to the application.

The operation performed on the application in this embodiment may be any one of the following operations.

In a case, the operation is an operation performed on an icon of the application. For details about this operation manner, refer to step 308. Details are not described in this embodiment again.

In another case, a tapping operation is entered to a running interface of an application running on a background of the mobile device, so that the application receiving a touch event entered by a user is switched to a foreground for running.

In another case, an operation is performed on an application by entering a target voice to a microphone of the mobile device. For a specific manner of entering the target voice, refer to step 308. Details are not described in this embodiment again.

The foregoing two cases are about an operation performed on an application that has been installed on the mobile device. This embodiment further enables a user to enter an operation to a web application.

The web application is an application implemented by using a web page technology. In a word, the web application is an application that runs on a network and a standard browser and that is developed based on the web page technology to implement a specific function.

If the user needs to enter an operation to the web application, in a case, the user may enter an operation to a desktop shortcut icon of the web application on the mobile device. For a specific process of entering the operation to the desktop shortcut icon, refer to a specific process of entering the operation to the icon of the application in step 308. Details are not described in this embodiment again.

In another case, the user may enter, on a browser, a keyword for searching for the web application, so that a running interface of the browser can redirect to a running interface in which the web application can be run, and accordingly a running interface currently displayed on the browser can implement a function of the web application.

The to-do list includes at least one piece of content, the at least one piece of content does not include time information and location information, and the application is an application required to complete the to-do list.

In this embodiment, to determine the to-do list corresponding to the application, to-do lists stored in the mobile device are detected to determine all the to-do lists stored in the mobile device.

Specifically, for a process in which the mobile device detects the to-do lists, refer to step 301 shown in FIG. 3A. Details are not described in this embodiment again.

In a process of determining the to-do list corresponding to the application, all the to-do lists stored in the mobile device need to be analyzed to obtain the at least one piece of content included in the to-do list, so that at least one application corresponding to the to-do list can be determined based on the at least one piece of content included in the to-do list. For a specific process, refer to step 302 shown in FIG. 3A. Details are not described in this embodiment again.

This embodiment is described by using the fourth application scenario in step 302 shown in FIG. 3A as an example. As shown in Table 4, if an operation performed on an icon of an application Dianping is detected, it can be determined, based on the correspondence established in Table 4, that a to-do list corresponding to the application Dianping is wanting to go to Hai Di Lao and going to Quanjude.

Step 1002. The mobile device displays notification information that includes at least one piece of content included in the to-do list.

For a specific execution process of step 1002 in this embodiment, refer to step 309 shown in FIG. 3B. The specific execution process is not described in this embodiment again.

Step 1003. If the mobile device detects a touch event performed on the notification information, the mobile device determines whether the application can implement the to-do list, and performs step 1004 if the application can implement the to-do list, or performs step 1005 if the application cannot implement the to-do list.

For example, as shown in FIG. 7, if the application is Tencent Video, notification information "Descendants of the Sun" on a menu 700 receives a touch event entered by the user, and then a system of the mobile device determines whether Tencent Video can successfully play a video file "Descendants of the Sun".

In this application scenario, because Tencent Video is not granted copyright of playing "Descendants of the Sun", Tencent Video cannot implement a to-do list "Descendants of the Sun".

For example, as shown in FIG. 6, if the application is App Store, notification information "Download Any.Do" on a menu 600 receives a touch event entered by the user, and then a system of the mobile device determines whether App Store can successfully download the application Any.Do.

In this application scenario, because App Store can successfully download the application Any.Do, App Store can implement a to-do list of downloading Any.Do.

Step 1004. The mobile device controls the application to display a corresponding interface.

For example, as shown in FIG. 6, the application can directly redirect to a running interface in which the application Any.Do is downloaded, and therefore, the user can directly download the application Any.Do by using the running interface in which the application Any.Do is downloaded and that is displayed on the application.

Step 1005. The mobile device controls a third application to display a corresponding interface.

The third application and the application that currently receives a user operation are different applications and are applications that can implement a same function.

For example, if the application that currently receives the user operation is Dangdang, the third application may be Amazon. If the application that currently receives the user operation is Meituan, the third application may be Baidu Nuomi.

For example, as shown in FIG. 7, if the application that currently receives the user operation is Tencent Video, and Tencent Video cannot implement the to-do list of Descendants of the Sun, the system of the mobile device determines the third application. The third application and the application are used to implement a same function. In this application scenario, the third application and the application are both used to implement a video playing function.

In this application scenario, the system of the mobile device may determine that the third application is iQiyi. Because iQiyi has the copyright of playing a video Descendants of the Sun, when determining that Tencent Video cannot play Descendants of the Sun, the system of the device may directly control iQiyi to display a running interface in which the video Descendants of the Sun can be played. The user can directly play the video Descendants of the Sun by using the running interface displayed by iQiyi.

Step 1006. When detecting completion of the to-do list, the mobile device deletes the to-do list stored on the mobile device.

For a specific execution process of step 1006 in this embodiment, refer to the specific process of step 313 shown in FIG. 3B. Details are not described in this embodiment again.

The information reminder method in this embodiment has the following beneficial effects:

In this embodiment, a to-do list that does not have a reminder time and does not include a specific reminder location can be implemented. In a reminder process, if the operation performed on the application is detected, the to-do list corresponding to the application in all the to-do lists stored in the mobile device is detected, and the user is notified of the to-do list corresponding to the application, so that the user can quickly execute the corresponding to-do list by using the application. In this way, a procedure and duration that are required by the user to execute the to-do list are reduced, and efficiency of the user in performing an operation on the to-do list is improved.

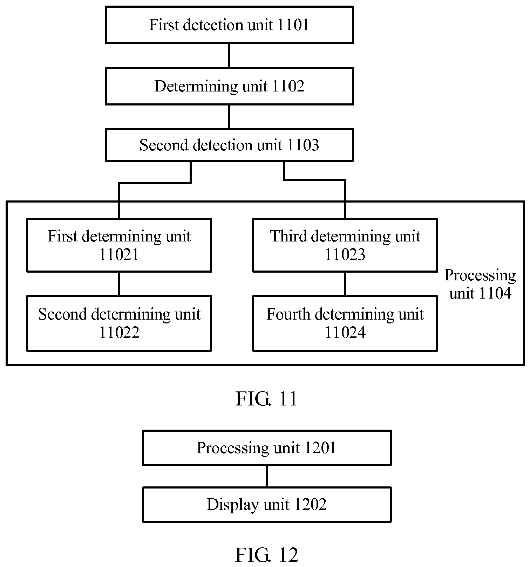

The following describes in detail, with reference to FIG. 11, a specific structure of a mobile device that can implement the information reminder method shown in FIG. 3A and FIG. 3B.

As shown in FIG. 11, the mobile device includes a first detection unit 1101, a determining unit 1102, a second detection unit 1103, and a processing unit 1104.

The first detection unit 1101 is configured to detect a to-do list stored on the mobile device. The to-do list includes at least one piece of content, and the at least one piece of content does not include time information and location information.

The determining unit 1102 is configured to determine at least one application corresponding to the to-do list. The at least one application is an application that has been installed on the mobile device, and any one of the at least one application is an application required to complete the to-do list.

The second detection unit 1103 is configured to detect an operation performed on any one of the at least one application.

Optionally, the operation is touching an icon of any one of the at least one application corresponding to the to-do list for a time not less than a preset time threshold.

Alternatively, the operation is touching an icon of any one of the at least one application corresponding to the to-do list by using a force not less than a preset force threshold.

Alternatively, the operation is touching an icon of any one of the at least one application corresponding to the to-do list, where a distance between the icon and a touch entity is not greater than a preset distance threshold.

Alternatively, the operation is entering a target voice by a user, and the target voice is used to enable a voice of any one of the at least one application corresponding to the to-do list.

Alternatively, the operation is performing tapping.

The processing unit 1104 is configured to respond to the operation to display notification information that includes the at least one piece of content in the to-do list.

The processing unit 1104 is further configured to display a menu, where the menu includes the notification information that includes the at least one piece of content in the to-do list.

The processing unit 1104 is further configured to display a home page of the application on which the operation is performed. The home page includes the notification information that includes the at least one piece of content in the to-do list.

Optionally, the first detection unit 1101 is further configured to: when detecting completion of the to-do list, delete the to-do list stored on the mobile device.

Optionally, the second detection unit 1103 is further configured to: if an operation of viewing the to-do list is detected, display the to-do list and the at least one application corresponding to the to-do list.

Optionally, the determining unit 1102 includes:
a first determining unit 11021, configured to create at least one to-do list category set, where the to-do list category set includes at least one to-do list, and the at least one to-do list in the same to-do list category set has a same requirement; and
a second determining unit 11022, configured to determine at least one target application corresponding to a target to-do list category set, where the target to-do list category set is any one of the at least one created to-do list category set, and the target application is an application required to complete at least one to-do list in the target to-do list category set.

Optionally, the determining unit 1102 includes:
a third determining unit 11023, configured to create at least one application category set, where the application category set includes at least one application that has been installed on the mobile device, and applications in the same application category set are used to implement a same function; and
a fourth determining unit 11024, configured to determine a target application category set that matches the at least one piece of content included in the to-do list, where any one of at least one application included in the target application category set is corresponding to the to-do list.

Optionally, the first detection unit 1101 is further configured to: if installation of a first application on the mobile device is detected, determine an application category set to which the first application belongs. The application category set to which the first application belongs is any one of the at least one created application category set, and a function that can be implemented by the first application is the same as a function that can be implemented by any application in the application category set to which the first application belongs.

The processing unit 1104 is further configured to add the first application to the application category set to which the first application belongs.

Optionally, the first detection unit 1101 is further configured to: if uninstallation of a second application from the mobile device is detected, determine an application category set to which the second application belongs.

The processing unit 1104 is further configured to delete the second application from the application category set to which the second application belongs.

Optionally, the second detection unit 1103 is further configured to: if a touch event performed on the notification information is detected, trigger the third application to display a corresponding interface.

The processing unit 1104 is further configured to control the third application to display the corresponding interface, where the corresponding interface is an interface in which the to-do list can be implemented.

Optionally, the second detection unit 1103 is further configured to: if a touch event performed on the notification information is detected, determine whether notification information sent by a fourth application is received. The notification information is used to indicate that the fourth application cannot implement the to-do list, and the fourth application is in the target application category set. The second detection unit is further configured to: if it is determined that the notification information sent by the fourth application is received, trigger the third application to display the corresponding interface.

The processing unit 1104 is further configured to control the third application to display the corresponding interface. The third application is in the target application category set, and the third application and the fourth application are different applications.

For a specific process in which the mobile device in this embodiment performs the information reminder method, refer to the embodiment shown in FIG. 3A and FIG. 3B. Details are not described in this embodiment again.

The information reminder method in this embodiment has the following beneficial effects:
According to the mobile device provided in this embodiment, for a to-do list that does not have a reminder time and does not include a specific reminder location, the user can be notified by using an application that can execute the to-do list, so that when the user enters an operation to the application, the application can automatically remind the user of the to-do list corresponding to the application, and accordingly the user can quickly execute the corresponding to-do list by using the application. In this way, a procedure and duration that are required by the user to execute the to-do list are reduced, and efficiency of the user in performing an operation on the to-do list is improved.

The following describes, with reference to FIG. 12, another embodiment of a mobile device that can provide an information reminder. For a specific procedure for performing the information reminder method by the mobile device provided in this embodiment, refer to FIG. 10.

As shown in FIG. 12, the mobile device includes:
a processing unit 1201, configured to: if an operation performed on an application is detected, determine a to-do list corresponding to the application, where the to-do list includes at least one piece of content, the at least one piece of content does not include time information and location information, and the application is an application required to complete the to-do list; and
a display unit 1202, configured to display notification information that includes the at least one piece of content included in the to-do list.

For a specific process in which the mobile device in this embodiment performs the information reminder method, refer to the embodiment shown in FIG. 10. Details are not described in this embodiment again.

The information reminder method in this embodiment has the following beneficial effects:

According to the mobile device provided in this embodiment, a to-do list that does not have a reminder time and does not include a specific reminder location can be implemented. In a reminder process, if the operation performed on the application is detected, the to-do list corresponding to the application in all to-do lists stored in the mobile device is detected, and the user is notified of the to-do list corresponding to the application, so that the user can quickly execute the corresponding to-do list by using the application. In this way, a procedure and duration that are required by the user to execute the to-do list are reduced, and efficiency of the user in performing an operation on the to-do list is improved.

FIG. 11 describes a structure of a mobile device from a perspective of a functional module. The following further describes, with reference to FIG. 1, the structure of the mobile device from a perspective of entity hardware.

The mobile device includes one or more processors 203, a memory 204, a bus system, and one or more programs. The processors 203 are connected to the memory 204 by using the bus system.

The one or more programs are stored in the memory 204, the one or more programs include an instruction, and when being executed by the mobile device, the instruction enables the mobile device to perform the information reminder method shown in FIG. 3A and FIG. 3B.

For a specific process in which the mobile device in this embodiment performs the information reminder method, refer to FIG. 3A and FIG. 3B. Details are not described in this embodiment again.

For a specific structure of the mobile device in this embodiment, refer to the foregoing embodiments. Details are not described in this embodiment again.

Specifically, in this embodiment, the one or more programs include an instruction, and when being executed by the mobile device, the instruction enables the mobile device to perform the information reminder method shown in FIG. 3A and FIG. 3B. For a specific procedure for performing the information reminder method by the instruction, refer to FIG. 3A and FIG. 3B. Details are not described in this embodiment again.

FIG. 12 describes a structure of a mobile device from a perspective of a functional module. The following further describes, with reference to FIG. 1, the structure of the mobile device from a perspective of entity hardware.

The mobile device includes one or more processors 203, a memory 204, a bus system, and one or more programs. The processors 203 are connected to the memory 204 by using the bus system.

The one or more programs are stored in the memory 204, the one or more programs include an instruction, and when being executed by the mobile device, the instruction enables the mobile device to perform the information reminder method shown in FIG. 10.

For a specific process in which the mobile device in this embodiment performs the information reminder method, refer to FIG. 10. Details are not described in this embodiment again.

For a specific structure of the mobile device in this embodiment, refer to the foregoing embodiments. Details are not described in this embodiment again.

Specifically, in this embodiment, the one or more programs include an instruction, and when being executed by the mobile device, the instruction enables the mobile device to perform the information reminder method shown in FIG. 10. For a specific procedure for performing the information reminder method by the instruction, refer to FIG. 10. Details are not described in this embodiment again.

It may be clearly understood by persons skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A method, wherein the method is used on a mobile device and comprises:
detecting a to-do list stored on the mobile device, wherein the to-do list comprises at least one piece of content, and the at least one piece of content does not comprise time information and location information;
determining at least one application corresponding to the to-do list, wherein the at least one application is an application that has been installed on the mobile device, and any one of the at least one application is an application required to complete the to-do list;
detecting an operation performed on any one of the at least one application; and
responding to the operation to display notification information that comprises the at least one piece of content in the to-do list.

2. The method according to claim 1, wherein the responding to the operation to display notification information that comprises the at least one piece of content in the to-do list comprises:
displaying a menu, wherein the menu comprises the notification information that comprises the at least one piece of content in the to-do list.

3. The method according to claim 1, wherein the responding to the operation to display notification information that comprises the at least one piece of content in the to-do list comprises:
displaying a home page of the application on which the operation is performed, wherein the home page comprises the notification information that comprises the at least one piece of content in the to-do list.

4. The method according to any one of claims 1 to 3, wherein the method further comprises:
when detecting completion of the to-do list, deleting the to-do list stored on the mobile device.

5. The method according to any one of claims 1 to 4, wherein the method further comprises:
if an operation of viewing the to-do list is detected, displaying the to-do list and the at least one application corresponding to the to-do list.

6. The method according to any one of claims 1 to 5, wherein the determining at least one application corresponding to the to-do list comprises:
creating at least one to-do list category set, wherein the to-do list category set comprises at least one to-do list, and the at least one to-do list in the same to-do list category set has a same requirement; and
determining at least one target application corresponding to a target to-do list category set, wherein the target to-do list category set is any one of the at least one created to-do list category set, and the target application is an application required to complete at least one to-do list in the target to-do list category set.

7. The method according to any one of claims 1 to 6, wherein the determining at least one application corresponding to the to-do list comprises:
creating at least one application category set, wherein the application category set comprises at least one application that has been installed on the mobile device, and applications in the same application category set are used to implement a same function; and
determining a target application category set that matches the at least one piece of content comprised in the to-do list, wherein any one of at least one application comprised in the target application category set is corresponding to the to-do list.

8. The method according to claim 7, wherein after the creating at least one application category set, the method further comprises:
if installation of a first application on the mobile device is detected, determining an application category set to which the first application belongs, wherein the application category set to which the first application belongs is any one of the at least one created application category set, and a function that can be implemented by the first application is the same as a function that can be implemented by any application in the application category set to which the first application belongs; and
adding the first application to the application category set to which the first application belongs.

9. The method according to claim 7, wherein after the determining a target application category set that matches the at least one piece of content comprised in the to-do list, the method further comprises:
if uninstallation of a second application from the mobile device is detected, determining an application category set to which the second application belongs; and
deleting the second application from the application category set to which the second application belongs.

10. The method according to any one of claims 1 to 9, wherein after the responding to the operation to display notification information that comprises the at least one piece of content in the to-do list, the method further comprises:
if a touch event performed on the notification information is detected, triggering the third application to display a corresponding interface, wherein the corresponding interface is an interface in which the to-do list can be implemented.

11. The method according to claim 10, wherein the triggering, if a touch event performed on the notification information is detected, the third application to display a corresponding interface comprises:
if the touch event performed on the notification information is detected, determining whether notification information sent by a fourth application is received, wherein the notification information is used to indicate that the fourth application cannot implement the to-do list, and the fourth application is in the target application category set; and
if it is determined that the notification information sent by the fourth application is received, controlling the third application to display the corresponding interface, wherein the third application is in the target application category set, and the third application and the fourth application are different applications.

12. An information reminder method, wherein the method is used on a mobile device and comprises:
if an operation performed on an application is detected, determining a to-do list corresponding to the application, wherein the to-do list comprises at least one piece of content, the at least one piece of content does not comprise time information and location information, and the application is an application required to complete the to-do list; and
displaying notification information that comprises the at least one piece of content comprised in the to-do list.

13. A mobile device, comprising:
a first detection unit, configured to detect a to-do list stored on the mobile device, wherein the to-do list comprises at least one piece of content, and the at least one piece of content does not comprise time information and location information;
a determining unit, configured to determine at least one application corresponding to the to-do list, wherein the at least one application is an application that has been installed on the mobile device, and any one of the at least one application is an application required to complete the to-do list;
a second detection unit, configured to detect an operation performed on any one of the at least one application; and
a processing unit, configured to respond to the operation to display notification information that comprises the at least one piece of content in the to-do list.

14. The mobile device according to claim 13, wherein:
that the processing unit is configured to respond to the operation to display notification information that comprises the at least one piece of content in the to-do list comprises: responding to the operation to display a menu, wherein the menu comprises the notification information that comprises the at least one piece of content in the to-do list.

15. The mobile device according to claim 13, wherein:
that the processing unit is configured to respond to the operation to display notification information that comprises the at least one piece of content in the to-do list comprises: responding to the operation to display a home page of the application on which the operation is performed, wherein the home page comprises the notification information that comprises the at least one piece of content in the to-do list.

16. The mobile device according to any one of claims 13 to 15, wherein:
the first detection unit is further configured to: when detecting completion of the to-do list, delete the to-do list stored on the mobile device.

17. The mobile device according to any one of claims 13 to 16, wherein the second detection unit is further configured to: if an operation of viewing the to-do list is detected, display the to-do list and the at least one application corresponding to the to-do list.

18. The mobile device according to any one of claims 13 to 17, wherein the determining unit comprises:
a first determining unit, configured to create at least one to-do list category set, wherein the to-do list category set comprises at least one to-do list, and the at least one to-do list in the same to-do list category set has a same requirement; and
a second determining unit, configured to determine at least one target application corresponding to a target to-do list category set, wherein the target to-do list category set is any one of the at least one created to-do list category set, and the target application is an application required to complete at least one to-do list in the target to-do list category set.

19. The mobile device according to any one of claims 13 to 17, wherein the determining unit comprises:
a third determining unit, configured to create at least one application category set, wherein the application category set comprises at least one application that has been installed on the mobile device, and applications in the same application category set are used to implement a same function; and
a fourth determining unit, configured to determine a target application category set that matches the at least one piece of content comprised in the to-do list, wherein any one of at least one application comprised in the target application category set is corresponding to the to-do list.

20. The mobile device according to claim 19, wherein:
the first detection unit is further configured to: if installation of a first application on the mobile device is detected, determine an application category set to which the first application belongs, wherein the application category set to which the first application belongs is any one of the at least one created application category set, and a function that can be implemented by the first application is the same as a function that can be implemented by any application in the application category set to which the first application belongs; and
the processing unit is further configured to add the first application to the application category set to which the first application belongs.

21. The mobile device according to claim 19, wherein the first detection unit is further configured to: if uninstallation of a second application from the mobile device is detected, determine an application category set to which the second application belongs; and
the processing unit is further configured to delete the second application from the application category set to which the second application belongs.

22. The mobile device according to any one of claims 13 to 21, wherein the second detection unit is further configured to: if a touch event performed on the notification information is detected, trigger the third application to display a corresponding interface; and
the processing unit is further configured to control the third application to display the corresponding interface, wherein the corresponding interface is an interface in which the to-do list can be implemented.

23. The mobile device according to claim 22, wherein the second detection unit is further configured to: if the touch event performed on the notification information is detected, determine whether notification information sent by a fourth application is received, wherein the notification information is used to indicate that the fourth application cannot implement the to-do list, and the fourth application is in the target application category set; and the second detection unit is further configured to: if it is determined that the notification information sent by the fourth application is received, trigger the third application to display the corresponding interface; and
the processing unit is further configured to control the third application to display the corresponding interface, wherein the third application is in the target application category set, and the third application and the fourth application are different applications.

24. A mobile device, comprising:
a processing unit, configured to: if an operation performed on an application is detected, determine a to-do list corresponding to the application, wherein the to-do list comprises at least one piece of content, the at least one piece of content does not comprise time information and location information, and the application is an application required to complete the to-do list; and
a display unit, configured to display notification information that comprises the at least one piece of content comprised in the to-do list.

25. A mobile device, comprising:
one or more processors, a memory, a bus system, and one or more programs, wherein the processors are connected to the memory by using the bus system; and
the one or more programs are stored in the memory, the one or more programs comprise an instruction, and when being executed by the mobile device, the instruction enables the mobile device to perform the method according to any one of claims 1 to 11.

26. A mobile device, comprising:
one or more processors, a memory, a bus system, and one or more programs, wherein the processors are connected to the memory by using the bus system; and
the one or more programs are stored in the memory, the one or more programs comprise an instruction, and when being executed by the mobile device, the instruction enables the mobile device to perform the method according to claim 12.

27. A computer readable storage medium that stores one or more programs, wherein the one or more programs comprise an instruction, and when being executed by a mobile device, the instruction enables the mobile device to perform the method according to any one of claims 1 to 11.

28. A computer readable storage medium that stores one or more programs, wherein the one or more programs comprise an instruction, and when being executed by a mobile device, the instruction enables the mobile device to perform the method according to claim 12.
